(19) Europäisches Patentamt
European Patent Office
Office européen des brevets

(11)  EP 2 579 501 A1

(12) **EUROPEAN PATENT APPLICATION**
published in accordance with Art. 153(4) EPC

(43) Date of publication:
    **10.04.2013  Bulletin 2013/15**

(51) Int Cl.:
    ***H04L 9/32*** *(2006.01)*

(21) Application number: **11786601.2**

(22) Date of filing: **23.05.2011**

(86) International application number:
    **PCT/JP2011/061775**

(87) International publication number:
    **WO 2011/148902 (01.12.2011 Gazette 2011/48)**

(84) Designated Contracting States:
    **AL AT BE BG CH CY CZ DE DK EE ES FI FR GB GR HR HU IE IS IT LI LT LU LV MC MK MT NL NO PL PT RO RS SE SI SK SM TR**

(30) Priority:  **28.05.2010  JP 2010122797**

(71) Applicant: **NEC Corporation**
    **Tokyo 108-8001 (JP)**

(72) Inventors:
    • **TERANISHI Isamu**
      **Tokyo 108-8001 (JP)**
    • **FURUKAWA Jun**
      **Tokyo 108-8001 (JP)**

(74) Representative: **Vossius & Partner**
    **Siebertstrasse 4**
    **81675 München (DE)**

(54) **ANONYMOUS CREDENTIAL SYSTEM, USER DEVICE, VERIFICATION DEVICE, ANONYMOUS CREDENTIAL METHOD, AND ANONYMOUS CREDENTIAL PROGRAM**

(57)    A signature unit, in which a user device generates/transmits digital signature data to an authentication device, includes: a first function, which receives as input a plurality of subsets in which a plurality of characteristics of the users are classified; a second function, which generates a first encrypted text acquired by encrypting a user device public key with an identification device public key; a third function, which generates a second encrypted text, acquired by encrypting characteristic values belonging to a specific subset among the subsets with a characteristic value disclosure device public key; and a fourth function, which employs portions of a group public key and a member certificate to generates a signature of knowledge that denotes that data, of multiplication of a portion of the user device public key and all of the numerical values of a characteristic value certificate corresponding to each of the characteristics, satisfies the specif conditions.

FIG. 1

**Description**

TECHNICAL FIELD

The present invention relates to an anonymous credential system, a user device, a verification device, an anonymous credential method, and an anonymous credential program. More specifically, the present invention relates to an anonymous credential system and the like capable of handling characteristic values that are not binary values but are specific numerical values.

BACKGROUDN ART

As the networks constituted with computers, mobile phones, and the like are being spread socially, there are increasing opportunities to use the digital signature technique for authenticating individuals. However, through the use of the digital signature, the history of activities done by the individual is recorded to the computer minutely. Thus, it is possible to have problems regarding protection of privacies.

The anonymous credential signature techniques (Anonymous Credential) depicted in Non-Patent Documents 1, 2, and the like are techniques that can overcome such problems. Provided that characteristics of each user are $\chi[1]$, ---, $\chi[n]$ and an arbitrary subset of $\{1, ---, n\}$ is J=$\{il, ---, im\}$, each user can generate a digital signature data "Signature" while keeping anonymous by disclosing a part of characteristics $\chi[il]$, ---, $\chi[im]$ belonging to $i \in J$ and concealing the remaining characteristics. Note that m and n are natural numbers satisfying m<n.

The person who receives the digital signature data "Signature" can confirm that the user who generated the "Signature" has the characteristics $\chi[il]$, ---, $\chi[im]$ belonging to $i \in J$ but cannot know the characteristics themselves. Only the authorized person who has an identification device can know the characteristics.

For example, when using a rental car, it is possible to rent a car while keeping anonymous by disclosing only a characteristic of "holding a driver's license" to the car rental company and signing to time information. The person who rented the car can be specified by those who are authorized such as the police by using an identification device only when the rented car is involved in an accident, a crime, or the like.

As technical documents related thereto, there are following patent documents. Among those, depicted in Patent Document 1 are a characteristic certificate issuing method and the like which, when the characteristic verifier cannot be specified individually, re-encrypt the characteristic certificate with a public key of a characteristic decryption organization and request the organization to disclose the characteristic value. In Patent Document 2, depicted are a certificate issuing device and the like which request to issue an anonymous public key by using respective encryption/decryption keys of "reply" and "kana".

In Patent Document 3, depicted are an anonymous credential method and the like capable of using a group digital signature which certifies that a user belongs to a specific group. In Patent Document 4, depicted is an anonymous credential signature technique which keeps information regarding a specific user as a black list to make it possible to specify the user.

Patent Document 1: Japanese Unexamined Patent Publication 2005-311648
Patent Document 2: Japanese Unexamined Patent Publication 2007-267153
Patent Document 3: Japanese Unexamined Patent Publication 2009-027708
Patent Document 4: Japanese Unexamined Patent Publication 2009-171323

Non-Patent Document 1: JanCamenisch, AnnaLysyanskaya: A Signature Scheme with Efficient Protocols, SCN 2002: 268-289
Non-Patent Document 2: JunFukukawa, Hideki Imai: An Efficient Group Signature Scheme from Bilinear Maps. ACISP 2005: 455-467

The anonymous credential signature techniques depicted in Non-Patent Documents 1, 2, and the like handle characteristic values having only two values such as "Yes", "No", e.g., "holds driver's licence", "male", and "member of OO credit card". However, there are characteristic values of each user having specific numerical values that are not binary values, which have a meaning in a fact that the numerical values are within a specific range.

For example, regarding a characteristic value "age", it is necessary to check whether or not the user is under age in various scenes such as "driving a car", "selling alcohol or cigarette", and the like. Patent Documents 1 to 4 and Non-Patent Documents 1 to 2 described above do not disclose an anonymous credential signature technique which can prove that the user is not under age while concealing the specific numerical value of the age in such cases.

An object of the present invention is to provide an anonymous credential system, a user device, a verification device, an anonymous credential method, and an anonymous credential program capable of handling characteristic values that are not binary values but are specific numerical values and capable of proving that the characteristic value satisfies a specific condition even though the user conceals the characteristic value itself.

DISCLOSURE OF THE INVENTION

In order to achieve the foregoing object, the anonymous credential system according to the present invention is an anonymous credential system which includes, in a mutually-connected manner: a user device belonging to a specific group; a verification device which verifies that the user device belongs to the group without identifying discriminating information of the user device; an identification device which is authorized to identify the discriminating information; and a characteristic value disclosure device which is authorized to identify characteristic values of the user, wherein:

the user device includes
a storage module which stores in advance a user device public key, a user device private key corresponding thereto, a group public key showing that the user device belongs to the group, a member certificate generated by using a group private key corresponding to the group public key, a characteristic value certificate generated by using characteristic values corresponding to each of the characteristics of the user and the user private key, an identification device public key of the identification device, and a characteristic value disclosure device public key of the characteristic value disclosure device; and a signature unit which generates digital signature data and transmits it to an authentication device,
the member certificate contains a numerical value E acquired by performing modular exponentiation by using a reciprocal of data $\rho$ generated from the group private key $\pi$ and a part $\kappa$ of the member certificate on the multiple that is acquired by multiplying a numerical value acquired by performing modular exponentiation on a part $\Phi\_1$ of group public key with the user private key $\delta$, a numerical value acquired by performing modular exponentiation on another part $\Phi\_2$ of group public key with a part $\beta$ of the member certificate, and still another part $\Phi\_0$ of the group public key;
the characteristic value certificate corresponding to the i-th $\chi[i]$ of the characteristics contains a numerical value E'[i] acquired by performing modular exponentiation by using a reciprocal of the $\rho$ on the multiple that is acquired by multiplying a numerical value acquired by performing modular exponentiation on data $\Psi\_1 [i]$ acquired from the $\chi[i]$ with the $\delta$, a numerical value acquired by performing modular exponentiation on data $\Psi2$ acquired from the $\chi[i]$ with a part r[i] of the characteristic certificate, and data $\Psi\_0[i]$ acquired from the characteristic $\chi[i]$;
the signature unit includes:

a first function which receives as inputs a plurality of subsets in which a plurality of characteristics of the users are classified; a second function which generates a first encrypted text acquired by encrypting the user device public key with the identification device public key; a third function which generates a second encrypted text acquired by encrypting the characteristic values belonging to a specific subset among the subsets with the characteristic value disclosure device public key; and a fourth function which generates a signature text of knowledge showing that the data acquired by multiplying a part of the user device public key with the numerical values of the characteristic value certificate corresponding to each of all the characteristics satisfies a specific condition given in advance by using a part of the group public key and a part of the member certificate, generates the digital signature data containing the first and second encrypted texts as well as the signature text of knowledge, and outputs it to the verification device;
provided that a random number used when the third function of the signature unit generates the second encrypted text is $\tau[i]$, a numerical value acquired by multiplying the E'[i] corresponding to $\chi[i]$ with the E is G, and a numerical value acquired by adding all r[i] corresponding to all the characteristics $\chi[i]$ and then adding $\beta$ thereto is r, the fourth function of the signature unit generates a signature text of knowledge showing that the G, the r, the characteristic value $\zeta[i]$ belonging to the specific subset, the random number $\tau$ used when the second function generates the first encrypted text, and $\tau'[i]$ satisfy the specific given condition; and
the verification device includes:

a storage module which stores in advance the group public key and the identification device public key;
a signature text verifying function which extracts the first and second encrypted texts contained in the digital signature data received from the user device, and verifies whether or not the signature text of knowledge is proper by using the group public key; and
a disclosure request function which transfers the first encrypted text to the identification device having an identification device private key corresponding to the identification device public key to make a request to identify the discriminating information of the user device, and transfers the second encrypted text to the characteristic value disclosure device having a characteristic value disclosure device private key corresponding to the characteristic value disclosure device public key to make a request to identify the characteristic value.

In order to achieve the foregoing object, the user device according to the present invention is a user device belonging to a specific group and constituting an anonymous credential system which includes, in a mutually-connected manner, a verification device which verifies that the user device belongs to the group without identifying discriminating information of the user device, an identification device which is authorized to identify the discriminating information, and a characteristic value disclosure device which is authorized to identify characteristic values of the user, and the user device includes:

a storage module which stores in advance a user device public key, a user device private key corresponding thereto, a group public key showing that the user device belongs to the group, a member certificate generated by using a group private key corresponding to the group public key, a characteristic value certificate generated by using characteristic values corresponding to each of the characteristics of the user and the user private key, an identification device public key of the identification device, and a characteristic value disclosure device public key of the characteristic value disclosure device; and a signature unit which generates digital signature data and transmits it to an authentication device, wherein
the member certificate contains a numerical value E acquired by performing modular exponentiation by using a reciprocal of data $\rho$ generated from the group private key $\pi$ and a part $\kappa$ of the member certificate on the multiple that is acquired by multiplying a numerical value acquired by performing modular exponentiation on a part $\Phi\_1$ of group public key with the user private key $\delta$, a numerical value acquired by performing modular exponentiation on another part $\Phi\_2$ of group public key with a part $\beta$ of the member certificate, and still another part $\Phi\_0$ of the group public key;
the characteristic value certificate corresponding to the i-th $\chi[i]$ of the characteristics contains a numerical value E'[i] acquired by performing modular exponentiation by using a reciprocal of the $\rho$ on the multiple that is acquired by multiplying a numerical value acquired by performing modular exponentiation on data $\Psi\_1 [i]$ acquired from the $\chi[i]$ with the $\delta$, a numerical value acquired by performing modular exponentiation on data $\Psi2$ acquired from the $\chi[i]$ with a part r[i] of the characteristic certificate, and data $\Psi\_0[i]$ acquired from the characteristics $\chi[i]$;
the signature unit includes:

a first function which receives as inputs a plurality of subsets in which a plurality of characteristics of the users are classified; a second function which generates a first encrypted text acquired by encrypting the user device public key with the identification device public key; a third function which generates a second encrypted text acquired by encrypting the characteristic values belonging to a specific subset among the subsets with the characteristic value disclosure device public key; and a fourth function which generates a signature text of knowledge showing that the data acquired by multiplying a part of the user device public key with the numerical values of the characteristic value certificate corresponding to each of all the characteristics satisfies a specific condition given in advance by using a part of the group public key and a part of the member certificate, generates digital signature data containing the first and second encrypted texts as well as the signature text of knowledge, and outputs it to the verification device; and
provided that a random number used when the third function of the signature unit generates the second encrypted text is $\tau[i]$, a numerical value acquired by multiplying the E'[i] corresponding to $\chi[i]$ with the E is G, and a numerical value acquired by adding all r[i] corresponding to all the characteristics $\chi[i]$ and then adding $\beta$ thereto is r, the fourth function of the signature unit generates a signature text of knowledge showing that the G, the r, the characteristic value $\zeta[i]$ belonging to the specific subset, the random number $\tau$ used when the second function generates the first encrypted text, and $\tau'[i]$ satisfy the specific given condition

In order to achieve the foregoing object, the verification device according to the present invention is a verification device which constitutes an anonymous credential system by being mutually connected to a user device belonging to a specific group, an identification device which is authorized to identify the discriminating information, and a characteristic value disclosure device which is authorized to identify characteristic values of the user, and verifies that the user device belongs to the group without identifying discriminating information of the constituting user device, and the verification device includes:

a storage module which stores in advance a user device public key, a user device private key corresponding thereto, a group public key showing that the user device belongs to the group, a member certificate generated by using a group private key corresponding to the group public key, a characteristic value certificate generated by using characteristic values corresponding to each of the characteristics of the user and the user private key, an identification device public key of the identification device, and a characteristic value disclosure device public key of the characteristic value disclosure device;

a storage module which stores in advance the group public key and the identification device public key;

a signature text verifying function which extracts the first and second encrypted texts contained in the digital signature data received from the user device, and verifies whether or not the signature text of knowledge is proper by using the group public key; and

a disclosure request function which transfers the first encrypted text to the identification device having an identification device private key corresponding to the identification device public key to make a request to identify the discriminating information of the user device, and further transfers the second encrypted text to the characteristic value disclosure device having a characteristic value disclosure device private key corresponding to the characteristic value disclosure device public key to make a request to identify the characteristic value.

In order to achieve the foregoing object, the anonymous credential method according to the present invention is an anonymous credential method used in an anonymous credential system which includes, in a mutually-connected manner, a user device belonging to a specific group, a verification device which verifies that the user device belongs to the group without identifying discriminating information of the user device, an identification device which is authorized to identify the discriminating information, and a characteristic value disclosure device which is authorized to identify characteristic values of the user, wherein

the user device executes each of processing contents of: storing in advance a user device public key, a user device private key corresponding thereto, a group public key showing that the user device belongs to the group, a member certificate containing a numerical value E acquired by performing modular exponentiation by using a reciprocal of data $\rho$ generated from the group private key $\pi$ and a part $\kappa$ of the member certificate on the multiple that is acquired by multiplying a numerical value acquired by performing modular exponentiation on a part $\Phi\_1$ of group public key generated by using the group private key corresponding to the group public key with the user private key $\delta$, a numerical value acquired by performing modular exponentiation on another part $\Phi\_2$ of group public key with a part $\beta$ of the member certificate, and still another part $\Phi\_0$of the group public key, a characteristic value certificate generated by using the user private key, which contains a characteristic value corresponding to the i-th $\chi[i]$ of the characteristic of the user, a numerical value E'[i] acquired by performing modular exponentiation by using a reciprocal of the $\rho$ on the multiple that is acquired by multiplying a numerical value acquired by performing modular exponentiation on data $\Psi\_1$ [i] acquired from the $\chi[i]$ with the $\delta$, a numerical value acquired by performing modular exponentiation on data $\Psi2$ acquired from the $\chi[i]$ with a part r[i] of the characteristic certificate, and data $\Psi\_0[i]$ acquired from the characteristics $\chi[i]$, an identification device public key of the identification device, and a characteristic value disclosure device public key of the characteristic value disclosure device;

receiving a plurality of subsets in which a plurality of characteristics of the users are classified as inputs;

generating a first encrypted text acquired by encrypting the user device public key with the identification device public key;

generating a second encrypted text acquired by encrypting the characteristic values belonging to a specific subset among the subsets with the characteristic value disclosure device public key; and

provided that a random number used when generating the second encrypted text is $\tau[i]$, a numerical value acquired by multiplying the E'[i] corresponding to $\chi[i]$ with the E is G, and a numerical value acquired by adding all r[i] corresponding to all the characteristics $\chi[i]$ and then adding $\beta$ thereto is r, generating a signature text of knowledge showing that the G, the r, the characteristic value $\zeta[i]$ belonging to the specific subset, the random number $\tau$ used when the second function generates the first encrypted text, and the $\tau'[i]$ satisfy the specific given condition by using a part of the group public key and a part of the member certificate, generating the digital signature data containing the first and second encrypted texts as well as the signature text of knowledge, and outputting it to the verification device; and

the verification device executes each of processing contents of:

storing in advance the group public key and the identification device public key;

extracting the first and second encrypted texts contained in the digital signature data received from the user device; and

verifying whether or not the signature text of knowledge is proper by using the group public key.

In order to achieve the foregoing object, the anonymous credential program according to the present invention is an anonymous credential program used in an anonymous credential system which includes, in a mutually-connected manner, a user device belonging to a specific group, a verification device which verifies that the user device belongs to the group without identifying discriminating information of the user device, an identification device which is authorized to identify the discriminating information, and a characteristic value disclosure device which is authorized to identify characteristic values of the user, the program causing a computer, which stores in advance a user device public key, a user device private key corresponding thereto, a group public key showing that the user device belongs to the group, a member certificate containing a numerical value E acquired by performing modular exponentiation by using a reciprocal of data $\rho$ generated from the group private key $\pi$ and a part $\kappa$ of the member certificate on the multiple that is acquired by multiplying a numerical value acquired by performing modular exponentiation on a part $\Phi\_1$ of group public key generated by using the group private key corresponding to the group public key with the user private key $\delta$, a numerical value acquired by performing modular exponentiation on another part $\Phi\_2$ of group public key with a part $\beta$ of the member certificate, and still another part $\Phi\_0$ of the group public key, a characteristic value certificate generated by using the user private key, which contains a characteristic value corresponding to the i-th $\chi[i]$ of the characteristic of the user, a numerical value E'[i] acquired by performing modular exponentiation by using a reciprocal of the $\rho$ on the multiple that is acquired by multiplying a numerical value acquired by performing modular exponentiation on data $\Psi\_1[i]$ acquired from the $\chi[i]$ with the $\delta$, a numerical value acquired by performing modular exponentiation on data $\Psi2$ acquired from the $\chi[i]$ with a part r[i] of the characteristic certificate, and data $\Psi\_0[i]$ acquired from the characteristics $\chi[i]$, an identification device public key of the identification device, and a characteristic value disclosure device public key of the characteristic value disclosure device, to execute:

> a procedure of receiving a plurality of subsets in which a plurality of characteristics of the users are classified as inputs;
> a procedure of generating a first encrypted text acquired by encrypting the user device public key with the identification device public key;
> a procedure of generating a second encrypted text acquired by encrypting the characteristic values belonging to a specific subset among the subsets with the characteristic value disclosure device public key; and
> provided that a random number used when generating the second encrypted text is $\tau[i]$, a numerical value acquired by multiplying the E'[i] corresponding to $\chi[i]$ with the E is G, and a numerical value acquired by adding all r[i] corresponding to all the characteristics $\chi[i]$ and then adding $\beta$ thereto is r, a procedure of generating a signature text of knowledge showing that the G, the r, the characteristic value $\zeta[i]$ belonging to the specific subset, the random number $\tau$ used when the second function generates the first encrypted text, and the $\tau'[i]$ satisfy the specific given condition by using a part of the group public key and a part of the member certificate, generating the digital signature data containing the first and second encrypted texts as well as the signature text of knowledge, and outputting it to the verification device.

As described above, the present invention is so structured that the user device generates and outputs the digital signature data containing the first encrypted text acquired by encrypting the user device public key with the identification device public key, the second encrypted text acquired by encrypting the characteristic value by the characteristic value disclosure device public key, and the signature text. Thus, when the verification device verifies the signature text of knowledge, it is possible to make a request to the characteristic value disclosure device to identify the characteristic value. This makes it possible to provide the anonymous credential system, the user device, the verification device, the anonymous credential method, and the anonymous credential program capable of handling the characteristic values that are not binary values but are specific numerical values and capable of proving that the characteristic value satisfies a specific condition even though the user conceals the characteristic value itself.

BRIEF DESCRIPTION OF THE DRAWINGS

FIG. 1 is an explanatory chart showing the structure of an anonymous credential system according to a first embodiment of the present invention;
FIG. 2 is an explanatory chart showing the more detailed structures of a signature unit and a verification unit shown in FIG. 1;
FIG. 3 is a flowchart showing operations of the signature unit shown in FIG. 1;
FIG. 4 is a flowchart showing operations of the verification unit shown in FIG. 1;
FIG. 5 is a flowchart showing operations of an identification unit shown in FIG. 1;
FIG. 6 is a flowchart showing operations of a characteristic value disclosure unit shown in FIG. 1;
FIG. 7 is an explanatory chart showing the structure of an anonymous credential system according to a second embodiment of the present invention;
FIG. 8 is a chart following FIG. 7;
FIG. 9 is an explanatory chart showing the more detailed structures of a signature unit and a verification unit shown in FIGS. 7 to 8;

FIG. 10 is a flowchart showing operations of an identification device key generating unit shown in FIGS. 7 to 8;

FIG. 11 is a flowchart showing operations of a characteristic value disclosure device key generating unit shown in FIGS. 7 to 8 for generating a characteristic value disclosure device public key (apk);

FIG. 12 is a flowchart showing operations of the characteristic value disclosure device key generating unit shown in FIGS. 7 to 8 for generating the characteristic value disclosure device private key (apk);

FIG. 13 is a flowchart showing operations of a group key generating unit shown in FIGS. 7 to 8;

FIG. 14 is a flowchart showing operations of a user device key generating unit shown in FIGS. 7 to 8;

FIG. 15 is a flowchart showing operations of a member certificate issuing unit and a member certificate acquiring unit shown in FIGS. 7 to 8;

FIG. 16 is a flowchart showing operations of a characteristic value certificate issuing unit and a characteristic value certificate acquiring unit shown in FIGS. 7 to 8;

FIG. 17 is a flowchart showing operations of the signature unit shown in FIGS. 7 to 8;

FIG. 18 is a flowchart showing operations of the verification unit shown in FIGS. 7 to 8;

FIG. 19 is a flowchart showing operations of an identification unit shown in FIGS. 7 to 8; and

FIG. 20 is a flowchart showing operations of a characteristic value disclosure unit shown in FIGS. 7 to 8.

BEST MODES FOR CARRYING OUT THE INVENTION

(FIRST EMBODIMENT)

Hereinafter, structures of a first embodiment according to the present invention will be described by referring to the accompanying drawings 1 to 2.

First, basic contents of the embodiment will be described, and more specific contents will be described thereafter.

An anonymous credential system 1 according to the embodiment is an anonymous credential system constituted by mutually connecting: a user device 10 belonging to a specific group; a verification device 20 which verifies that the user device belongs to the group without identifying discriminating information of the user; an identification device 30 which is authorized to identify the discriminating information; and a characteristic value disclosure device 40 which is authorized to identify the characteristic value of the user. The user device 10 includes: a storage module 13 which stores in advance a user device public key 181, a user device private key 182 corresponding thereto, a group public key 191 showing that the user device belongs to the group, a member certificate 193 generated by using a group private key 192 corresponding to the group public key, a characteristic value certificate 184 generated by using the characteristic value corresponding to each of the characteristics of the user and the user private key, an identification device public key 161 of the identification device, and a characteristic value disclosure device public key 171 of the characteristic value disclosure device; and a signature unit 110 which generates digital signature data and transmits it to the authentication device. The signature unit 110 includes: a first function 111 which receives as inputs a plurality of subsets in which a plurality of characteristics of the user are classified; a second function 112 which generates a first encrypted text acquired by encrypting the user device public key with the identification device public key; a third function 113 which generates a second encrypted text acquired by encrypting the characteristic values belonging to a specific subset among the subsets with the characteristic value disclosure device public key; and a fourth function 114 which generates a signature text of knowledge showing that the data acquired by multiplying a part of the user device public key with the numerical values of the characteristic value certificate corresponding to each of all the characteristics satisfies a specific condition given in advance by using a part of the group public key and a part of the member certificate, and generates and outputs digital signature data containing the first and second encrypted texts as well as the signature text of knowledge.

Provided that: the member certificate 193 contains a numerical value E acquired by performing modular exponentiation by using a reciprocal of data $\rho$ generated from the group private key $\pi$ and a part $\kappa$ of the member certificate on the multiple that is acquired by multiplying a numerical value acquired by performing modular exponentiation on a part $\Phi\_1$ of group public key with the user private key $\delta$, a numerical value acquired by performing modular exponentiation on another part $\Phi\_2$ of group public key with a part $\beta$ of the member certificate, and still another part $\Phi\_0$ of the group public key; the characteristic value certificate 184 corresponding to the i-th $\chi[i]$ of the characteristics contains a numerical value E'[i] acquired by performing modular exponentiation by using a reciprocal of the p on the multiple that is acquired by multiplying a numerical value acquired by performing modular exponentiation on data $\Psi\_1[i]$ acquired from $\chi[i]$ with the $\delta$, a numerical value acquired by performing modular exponentiation on data $\Psi2$ acquired from $\chi[i]$ with a part r[i] of the characteristic certificate, and data $\Psi\_0[i]$ acquired from the characteristic $\chi[i]$; the random number used when the third function 113 of the signature unit 110 generates the second encrypted text is $\tau[i]$, the numerical value acquired by multiplying E'[i] corresponding to $\chi[i]$ with E is G, and the numerical value acquired by adding all r[i] corresponding to all the characteristics $\chi[i]$ and then adding $\beta$ is r, the fourth function 114 of the signature unit 110 generates a signature text of knowledge showing that G, r, the characteristic value $\zeta[i]$ belonging to a specific subset, the random number $\tau$ used when the second function generates the first encrypted text, and $\tau'[i]$ satisfy a specific given condition.

Further, the group public key contains data such as Y and $\Omega$ in addition to $\Phi\_0$, $\Phi\_1$, $\Phi\_2$, and a plurality of subsets contain a first subset which discloses only the characteristics, a second subset which discloses the characteristics and takes the characteristic values as the subject of encryption, and a third subset which discloses the characteristics and the characteristic values. The fourth function 114 of the signature unit: first randomly selects $\alpha$, d, b, a, k from Z/qZ; further selects d'[i] randomly for the characteristics $\chi$[i] belonging to the first and second subsets; defines the numerical value acquired by multiplying E'[i] corresponding to all the characteristics $\chi$[i], E, and a numerical value acquired by performing modular exponentiation on $\Phi\_2$ with $\alpha$ as F; subsequently defines a numerical value acquired by multiplying a numerical value acquired by pairing Y with a numerical value that is acquired by multiplying a value acquired by multiplying $\Psi\_1$ [i] corresponding to the characteristics $\chi$[i] belonging to the first and second subsets with a numerical value acquired by performing modular exponentiation with d'[i], a numerical value acquired by performing modular exponentiation on $\Phi\_1$ with d, and a numerical value acquired by performing modular exponentiation on $\Phi\_2$ with b, a numerical value acquired by pairing $\Omega$ with a value acquired by performing modular exponentiation on $\Phi\_2$ with a, and a numerical value acquired by pairing F with a numerical value acquired by performing modular exponentiation on Y with k of an inverted sign as L; defines a hash value of data containing F and L as c; defines a numerical value acquired by dividing a numerical value acquired by adding a to a numerical value acquired by multiplying $\alpha$ with c by a prescribed modulus as A; defines a numerical value acquired by dividing a numerical value acquired by adding d to a numerical value acquired by multiplying $\delta$ with c by a prescribed modulus as D; defines a numerical value acquired by dividing a numerical value acquired by adding k to a numerical value acquired by multiplying $\kappa$ with c by a prescribed modulus as K; defines a numerical value acquired by adding the $\beta$ to a numerical value acquired by adding all r[i] corresponding to all the characteristics $\chi$[i], multiplying the c to a numerical value acquired by adding a product of $\kappa$ and $\alpha$ thereto, and dividing the b by a prescribed modulus as B; defines a numerical value acquired by dividing a numerical value acquired by adding d'[i] to a numerical value acquired by multiplying $\zeta$[i] and c to each i corresponding to the characteristics $\chi$[i] belonging to the first and second subsets with a prescribed modulus as D'[i]; and outputs data containing F, c, A, D, T, B, K and D'[i] as a signature text.

In the meantime, the verification device 20 includes: a storage module 23 which stores in advance a group public key 191 and an identification device public key 161; a signature text verifying function 121 which extracts the first and second encrypted texts contained in the digital signature data received from the user device, and verifies whether or not the signature text of knowledge is proper by using the group public key; and a disclosure request function 122 which transfers the first encrypted text to the identification device 30 having an identification device private key corresponding to the identification device public key to make a request to identify the discriminating information of the user device, and transfers the second encrypted text to the characteristic value disclosure device having a characteristic value disclosure device private key corresponding to the characteristic value disclosure device public key to make a request to identify the characteristic value.

Further, the group public key contains each data $\Phi\_0$, $\Phi\_1$, $\Phi\_2$, Y, and $\Omega$, a plurality of subsets contain a first subset which discloses only the characteristics, a second subset which discloses the characteristics and takes the characteristic values as the subject of encryption, and a third subset which discloses the characteristics and the characteristic values, and the signature text contains each data of data F, c, A, D, B, K, and D'[i] for $\chi$[i] belonging to the first and second subsets. Further, the signature text verifying function 121: calculates $\Psi\_0$[i] and $\Psi\_1$[i] from each characteristic $\chi$[i] belonging to all the subsets; subsequently defines a numerical value acquired by multiplying $\Phi\_0$ on a numerical value acquired by pairing Y with a product of numerical values acquired by multiplying a numerical value acquired by multiplying $\Psi\_1$[i] corresponding to the characteristics $\chi$[i] belonging to the first and second subsets with a numerical value acquired by performing modular exponentiation with D'[i], a product of numerical values acquired by performing modular exponentiation one $\Phi$1 with D, and a product of numerical values acquired by performing modular exponentiation on $\Phi$2 with B, a numerical value acquired by pairing $\Omega$ with a numerical value acquired by performing modular exponentiation on $\Phi\_2$ with A, a numerical value acquired by pairing F with a numerical value acquired by performing modular exponentiation on Y with k of an inverted sign, and a numerical value acquired by performing modular exponentiation on a product of $\Psi\_0$[i] corresponding to all the subsets $\chi$[i] and $\Psi\_1$[i] corresponding to $\chi$[i] belonging to the third subset with $\zeta$[i] as L; subsequently accepts the signature text when the hash value of the data containing F and L is equivalent to c, and rejects it if not.

Through having such structure, the anonymous credential system according to the embodiment can request the characteristic value disclosure device to identify the characteristic values when the verification device verifies the signature text of knowledge. This makes it possible to handle the characteristic values that are not binary values but specific numerical values, and to prove that the characteristic value satisfies a specific condition while the user conceals the characteristic value itself.

Hereinafter, this will be described in more details.

First, basic operations of the embodiment will be described. A normal anonymous credential signature technique first defines the private key of each user as $\delta$ and the public key as $\Delta=\theta^{\wedge}\delta$, and acquires in advance a member certificate ($\beta$, $\kappa$, E) satisfying following Expression 1 from the authorized user who has the member certificate issuing device. Note here that the function e is a bilinear pairing, and $\Phi_0$, $\Phi_1$, $\Phi_2$, $\Omega$, and Y are the public keys of the authorized users. In this Description, "A with a superscript B (e.g., A to the power of B) is expressed as "A^B", and "A with a subscript B" is expressed as "A_B" in the lines other than numerical expressions.

(Expression 1)

$$e(\Phi_0 \Phi_1{}^\delta \Phi_2{}^\beta, \Upsilon) = e(E, \Omega \Upsilon^\kappa)$$

Each user acquires E[i] satisfying following Expression 2 as the characteristic certificate of the characteristic $\chi[i]$ for i=1, ---, n from the authorized user who has the characteristic certificate issuing device. Note here that $\Phi'[i]$ is a part of the public key of the authorized user.

(Expression 2)

$$e(\Phi'_0[i], \Upsilon) = e(E'[i], \Omega \Upsilon^\kappa)$$

When F is defined as in following Expression 3, the relation shown in following Expression 4 applies from Expression 1 and Expression 2.

(Expression 3)

$$F = E \bullet (\prod_{i \in J} E'[i])$$

(Expression 4)

$$e(\Phi'_0 \bullet (\prod_{i \in J} \Phi'_0[i]) \bullet \Phi_1{}^\delta \Phi_2{}^\beta, \Upsilon) = e(F, \Omega \Upsilon^\kappa)$$

When generating the signature text satisfying the above relation, the random number $\tau$ is selected, the encrypted text Cipher shown in following Expression 5 is generated, and $(\delta, \beta, F)$ satisfying Expression 4 is generated as the signature of knowledge along with the Cipher. Note here that opk is the public key of the identification device.

(Expression 5)

$$\text{Cipher} = \text{Enc}(\text{opk}, \Theta'^{\delta}; \tau)$$

The verifier can check the properness of the signature text by verifying the signature of knowledge. Further, the identification device can acquire the user public key $\Delta = \theta^{\wedge}\delta$ and identify the user ID corresponding to $\Delta$ through decrypting the Cipher with the private key corresponding to opk.

In the meantime, the embodiment employs the authorized user who discloses the characteristic value, and the device owned by the authorized user is referred to as the characteristic value disclosure device. Hash_0 and Hash_1 are defined as Hash functions, $\chi[i]$ is defined as the characteristic of each user, $\zeta[i]$ is defined as the characteristic value of $\chi[i]$, $\Psi\_0[i]$ is defined as Hash_0($\chi[i]$), and $\Psi\_1[i]$ is defined as Hash_1($\chi[i]$), respectively.

The embodiment uses a pair ($r[i]$, $E'[i]$) satisfying following Expression 6 as the characteristic value certificate that certifies the characteristic of each user instead of $E[i]$ satisfying Expression 2.

(Expression 6)

$$e(\Psi_0[i]\Psi_1^{\varsigma[i]}\Phi_2^{r[i]}, \Upsilon) = e(E'[i], \Omega\Upsilon^{\kappa})$$

The user divides {1, ---, n} showing the own characteristic into three subsets H, I, and J when generating the digital signature.

For the characteristic $\chi[i]$ satisfying $i \in H$, it is desired to conceal the characteristic value $\zeta[i]$ from the verifier naturally and even from the authorized user who has the characteristic value disclosure device as well.

For the characteristic $\chi[i]$ satisfying $i \in I$, it is desired to conceal the characteristic value $\delta[i]$ from the verifier. However, the characteristic value $\zeta[i]$ may be disclosed to the authorized user who has the characteristic value disclosure device.

For the characteristic $\chi[i]$ satisfying $i \in J$, the characteristic value $\zeta[i]$ may be disclosed to the verifier.

When G and r are defined as in following Expression 7, the relation shown in following Expression 8 applies from Expression 1 and Expression 6. Note here that Enc and Enc' are encryption functions, and $\tau$, $\tau'$, [i] are random numbers.

(Expression 7)

$$G = E \cdot (\prod_{i \in H \cup I \cup J} E'[i])$$

$$r = \beta + (\sum_{i \in H \cup I \cup J} r[i])$$

(Expression 8)

$$e(\Phi_0 \cdot (\prod_{i \in H \cup I \cup J} \Psi_0[i]) \cdot \Phi_1^{\delta} \cdot (\prod_{i \in I \cup J} \Psi_1[i]^{\zeta[i]}) \cdot (\prod_{i \in J} \Psi_1[i]^{\zeta[i]})\Phi_2', \Upsilon) = e(G, \Omega\Upsilon^{\kappa})$$

The user device operated by the user calculates Cipher[i] shown in following Expression 9. Further, the user device discloses the characteristic value $\zeta[i]$ for each i $\in$ J, selects the characteristic value disclosure device R[i] to be the disclosure subject of the characteristic value for each i $\in$ I, defines the public key of the R[i] as apk[i], calculates the encrypted text Cipher'[i] shown in following Expression 10 for each i $\in$ I, and generates the signature text thereby.

(Expression 9)

$$\mathrm{Cipher}[i] = \mathrm{Enc}(\mathrm{opk}, \delta; \tau)$$

(Expression 10)

$$\mathrm{Cipher'}[i] = \mathrm{Enc'}(\mathrm{apk}[i], \delta[i]; \tau'[i])$$

The characteristic value disclosure device R[i] has the private key that corresponds to apk[i]. Thus, it is possible to acquire the characteristic value $\zeta[i]$ by decrypting the Cipher'[i].

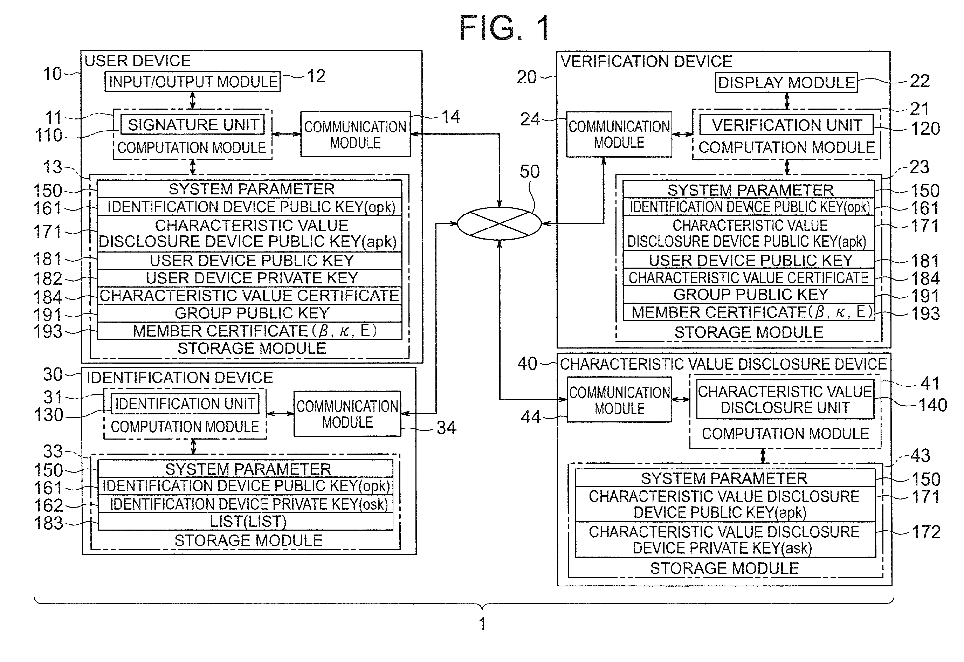

FIG. 1 is an explanatory chart showing the structure of the anonymous credential system according to the first embodiment of the present invention. The anonymous credential system 1 is constituted with: the user device 10 that is a computer device operated by the user; the verification device 20 that is a computer device operated by the verifier; and the identification device 30 and the characteristic value disclosure device 40, which operate according to a request from the verification device 20. Each of those devices is mutually communicable via a network 50. While one each of those devices is illustrated in FIG. 1, there may be one or more pieces of those devices in actual cases.

The user device 10 includes: a computation module (CPU: Central Processing Unit) 11 as the master unit for executing computer programs; an input/output module 12 which receives input operations from the user and displays calculation results acquired by the computation module 11; a storage module (RAM: Random Access Memory, ROM: Read Only Memory) 13 which stores the computer programs executed by the computation module 11, data, and the like: and a communication module 14 which exchanges data with other computers via the network 50.

Similarly, the verification device 20 also includes a computation module 21, a storage module 23, and a communication module 24, and further includes a display module 22 for displaying calculation results. Similarly, the identification device 30 also includes a computation module 31, a storage module 33, and a communication module 34. Similarly, the characteristic value disclosure device 40 also includes a computation module 41, a storage module 43, and a communication module 44. Functions and structures of each of those modules as hardware are the same in each of the devices.

In the computation module 11 of the user device 10, a signature unit 110 operates as a computer program. In the computation module 21 of the verification device 20, a verification unit 120 operates as a computer program. Further, in the computation module 31 of the identification device 30, an identification unit 130 operates as a computer program. Furthermore, in the computation module 41 of the characteristic value disclosure device 40, a characteristic value disclosure unit 140 operates as a computer program.

Further, common data called as a system parameter 150 is known and stored to all of each of the storage modules 13, 23, 33, and 44 of the respective devices. The system parameter 150 is constituted with a prime number q, (sufficient information for performing group calculations) on the order q group GRP[1], GRP[2], GRP[3], GRP', (sufficient information for calculating) a bilinear mapping e from GRP[1]$\times$GRP[2] to GRP[3]: GRP[1]$\times$GRP[2]$\rightarrow$GRP[3], and a generator $\Theta$ of GRP'.

From the viewpoint of the security, it is desirable that the discrete logarithm problems on GRP[1], GRP[2], and GRP[3] are difficult. As an example of such group, there is an elliptic curve group or its prime-number order subgroup. The elliptic curve group is necessarily characterized by the algebraic equation shown in Expression 11, so that it is possible to perform a group calculation on the elliptic curve group as long as (a, b, p) are given.

(Expression 11)

$$Y^2 = X^3 + aX + b \mod p$$

When using a prime-number order-number subset of an elliptic curve group, the generator of the subgroup is also required. Further, as the bilinear mapping e, it is possible to use Weil pairing or Tate pairing, for example. From the viewpoint of the security, it is desirable that the DDH problems on GRP' are difficult. As an example of such group, there is an elliptic curve group, a cyclic group, or a prime-number order subgroup of those.

Further, the public key and the private key are generated and given to the identification device 30 in advance, which are stored to the storage module 33 in advance. These are referred to as the identification device public key (opk) 161 and the identification device private key (osk) 162, respectively. The identification device public key (opk) 161 is also distributed and stored to the storage module 13 of the user device 10 and the storage module 23 of the verification device 20 via the network 50.

As the identification device public key (opk) 161 and the identification device private key (ops) 162, a public key/private key pair of a specific public key encryption method is used. The encryption function of the public key encryption method is expressed as Enc. The symbol Enc (opk, M; r) shows an encrypted text that is acquired by encrypting a plain text M with the encryption function Enc by using the public key opk and the random number r.

Further, the public key and the private key are generated and given in advance to the characteristic value disclosure device 40, which are stored to the storage module 43 in advance. These are referred to as a characteristic value disclosure device public key (apk) 171 and a characteristic value disclosure device private key (ask) 172, respectively. The characteristic value disclosure device public key (apk) 171 is also distributed and stored to the storage module 13 of the user device 10 and the storage module 23 of the verification device 20 via the network 50.

As the characteristic value disclosure device public key (apk) 171 and the characteristic value disclosure device private key (ask) 172, a public key/private key pair of a specific public key encryption method is used. The encryption function of the public key encryption method is expressed as Enc'. The symbol Enc' (apk, M; r) shows an encrypted text that is acquired by encrypting a plain text M with the encryption function Enc by using the public key apk and the random number r.

The public key and the private key are generated and given in advance to each user device 10, which are stored to the storage module 13 in advance. These are referred to as a user device public key 181 and a user device private key 182, respectively. Further, a list (LIST) 183 constituted with pairs of IDs of each of the user devices 10 and the respective user device public keys 181 is stored to the storage module 33 of the identification device 30 in advance. Note here that the user device public key 181 is an element $\Delta$ of GRP', and the user device private key is an element $\delta$ of Z/qZ. These satisfy the relation of $\Delta = \Theta^\wedge \delta$.

In this embodiment, each of the user devices 10 belongs to some kind of group. A public key inherent to the group is given to such group. This is referred to as a group public key 191. Hereinafter, it is assumed that there is only one group for simplifying the explanations. However, the method of the embodiment described herein can be easily expanded to the cases where there are a plurality of groups. The group public key 191 is generated in advance, and stored to the storage module 13 of each user device 10 in advance.

The group public key 191 is a set constituted with three elements $\Phi\_0$, $\Phi\_1$, $\Phi\_2$ of GRP[1] and two elements Y, $\Omega$ of GRP[2]. The group private key corresponding thereto is an element $\omega$ which satisfies $\Omega = Y^\wedge \omega$. The group public key 191 and the group private key corresponding thereto are generated in advance by **, and only the group public key 191 is given to the user device 10 belonging to the group.

At the same time, information certifying the fact of being belonging to the group is also given to the user device 10 that belongs to the group. This information is referred to as a member certificate 193. The member certificate 193 is a set constituted with two elements $\beta$, $\kappa$ of Z/qZ and an element E of GRP[1], which satisfies the relation shown in following Expression 12. Note here that $\rho = \omega + \kappa$.

(Expression 12)

$$\Phi_0 \Phi_1^{\ \delta} \Phi_2^{\ \beta} = E^\rho$$

Since $\Omega = Y^{\wedge}\omega$, it is also possible to rewrite Expression 12 as following Expression 13.

(Expression 13)

$$e(\Phi_0 \Phi_1^{\delta} \Phi_2^{\beta}, \Upsilon) = e(E, \Omega \Upsilon^{\kappa})$$

Further, the characteristics $\chi[1]$, ---, $\chi[n]$ of each of the user devices 10 (individuals or parties managing the devices 10) are given to each of the user devices 10 belonging to the group. Characteristic values are allotted to a part of or the entire characteristics, and information certifying the properness of the characteristic values are also given thereto. This information is referred to as a characteristic value certificate 184.

Examples of the characteristics given with the characteristic value certificate 184 are name, sex, age, address, telephone number, and the like, and any other kinds may be employed as well. The characteristic values thereof may be "male" or "female" for the case of sex, for example, "18 years old" or "35 years old" for the case of age. In the embodiment, it is assumed that the characteristic is expressed as an arbitrary bit string, and the characteristic value is a number between 0 and q, inclusive.

Hash_0 and Hash_1 are different Hash functions which take values in GRP[1]. In a case where the member certificate 193 of the user device 10 is $(\beta, \kappa, E)$, the characteristic value certificate 184 which certifies that the characteristic of the characteristic $\chi[i]$ of the user device 10 is $\zeta[i]$ is a set (r[i], E'[i]) constituted with an element of Z/qZ and an element of GRP[1], which satisfies the relation of following Expression 14.

(Expression 14)

$$\Psi_0[i] \Psi_1^{\varsigma[i]} \Phi_2^{r[i]} = E'[i]^{\rho}$$

Note here that $\Psi\_0[i]$, $\Psi\_1[i]$, $\rho$ and $\Omega$ satisfy the relation of following Expression 15, so that Expression 14 can also be expressed as in following Expression 16.

(Expression 15)

$$\Psi_0[i] = \mathrm{Hash}_0(\chi[i])$$

$$\Psi_1[i] = \mathrm{Hash}_1(\chi[i])$$

$$\rho = \omega + \kappa$$

$$\Omega = \Upsilon^{\omega}$$

(Expression 16)

$$e\left(\Psi_0[i]\Psi_1^{\varsigma[i]}\Phi_2^{r[i]}, \Upsilon\right) = e\left(E'[i], \Upsilon\, \Omega^\kappa\right)$$

The method described as the embodiment can be used only for the user device 10 belonging to the group, so that it is assumed hereinafter that the user device 10 belongs to the group unless there is any specific notification.

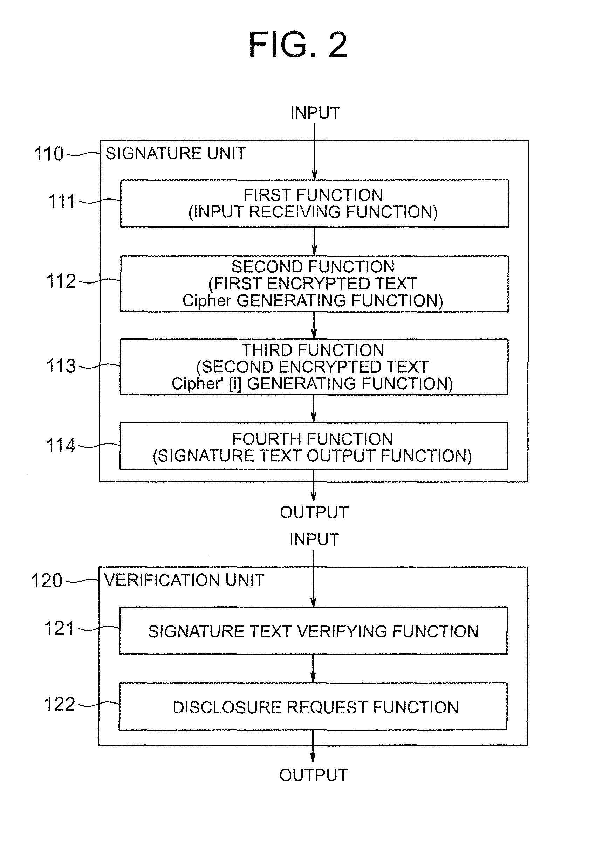

FIG. 2 is an explanatory chart showing the more detailed structures of the signature unit 110 and the verification unit 120 shown in FIG. 1. The signature unit 110 includes: a first function (input receiving function) 111 which receives inputs from the input/output module 12 and the storage module 13; a second function (a first encrypted text generating function) 112 which generates a first encrypted text described later; a third function (a second encrypted text generating function) 113 which generates a second encrypted text (Cipher'[i]) described later; and a fourth function (a signature text output function) 114 which generates a signature of knowledge "Proof" and outputs digital signature data "Signature" along with the first encrypted text (Cipher) and the second encrypted text (Cipher'[i]).

In the meantime, the verification unit 120 includes: a signature verifying function 121 which judges whether or not the digital signature data "Signature" received from the user device 10 is proper; and a disclosure request function 122 which requests the identification device 30 to identify the user when the digital signature data "Signature" is proper, and further requests the characteristic value disclosure device 40 to disclose the characteristic value.

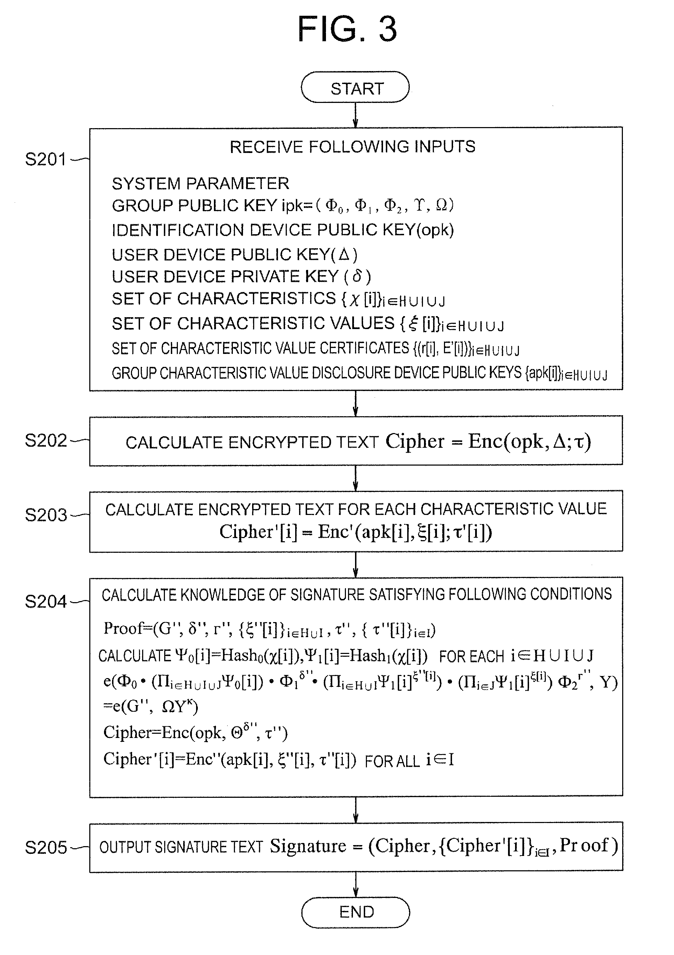

FIG. 3 is a flowchart showing operations of the signature unit 110 shown in FIG 1. $\chi[1]$, ---, $\chi[N]$ are defined as the characteristics of the user device 10. When a document M is inputted from the input/output module 12 to the user device 10, the signature unit 110 generates a signature text for the document M.

To the first function (input receiving function) 111 of the signature unit 110, the system parameter 150, the group public key (ipk) 191 shown in following Expression 17, the identification device public key (opk) 161, the user device public key ($\Delta$) 181, the user device private key ($\delta$) 182, the member certificate 193 ($\beta$, $\kappa$, E), the document M, the set of the characteristics of the user device 10 shown in following Expression 17, the set of the characteristic values of the characteristics, the set of the characteristic value certificates 184, and the set of the characteristic value disclosure device public key (apk) 171 are inputted (step S201).

(Expression 17)

$$\text{Group public key } \mathbf{ipk} = (\Phi_0, \Phi_1, \Phi_2, \Upsilon, \Omega)$$

$$\text{Set of characteristics} \left\{ \chi[i] \right\}_{i \in H \cup I \cup J}$$

$$\text{Set of characteristic values} \left\{ \varsigma[i] \right\}_{i \in H \cup I \cup J}$$

$$\text{Set of characteristic value certificates} \left\{ (r[i], E'[i]) \right\}_{i \in H \cup I \cup J}$$

$$\text{Set of characteristic value disclosure device public keys} \left\{ apk[i] \right\}_{i \in H \cup I \cup J}$$

The second function (first encrypted text generating function) 112 of the signature unit 110 subsequently selects the random number $\tau$ from Z/qZ, and calculates the encrypted text "Cipher" shown in following Expression 18 (step S202).
(Expression 18)

$$Cipher = Enc(opk, \Delta; \tau)$$

The third function (second encrypted text generating function) 113 of the signature unit 110 further selects the random number $\tau'[i]$ from $Z/qZ$ for each $i \in I$, and calculates the encrypted text "Cipher'[i]" for each characteristic value shown in following Expression 19 (step S203).

(Expression 19)

$$Cipher'[i] = Enc'(apk[i], \xi[i]; \tau'[i])$$

Further, the fourth function (signature text output function) 114 of the signature unit 110 generates the signature of knowledge "Proof" shown in following Expression 20 (step S204). This Proof satisfies the conditions shown in following Expression 21.

(Expression 20)

$$Proof = (G'', \delta'', r'', \{\xi''[i]\}_{i \in H \cup I}, \tau'', \{\tau''[i]\}_{i \in I})$$

(Expression 21)

$$\Psi[i] = Hash_0(\chi[i]), \Psi_1[i] = Hash_1(\chi[i]) \text{ for each } i \in H \cup I \cup J$$

$$e\left(\Phi_0 \cdot \left(\prod_{i \in H \cup I \cup J} \Psi_0[i]\right) \cdot \Phi_1^{\delta''} \cdot \left(\prod_{i \in H \cup I} \Psi_1[i]^{\xi''[i]}\right) \cdot \left(\prod_{i \in J} \Psi_1[i]^{\xi[i]}\right) \Phi_2^{r''}, \Upsilon\right)$$

$$= e(G'', \Omega \Upsilon^\kappa)$$

$$Cipher = Enc(opk, \Theta^{\delta''}, \tau'')$$

$$Cipher'[i] = Enc''(apk[i], \xi''[i], \tau''[i]) \text{ for all } i \in I$$

At last, the fourth function (signature text output function) 114 of the signature unit 110 outputs the digital signature data "Signature" shown in following Expression 22 (step S205).

(Expression 22)

$$Signature = (Cipher, \{Cipher'[i]\}_{i \in I}, Proof)$$

Note here that it is found that all the expressions described above can be satisfied by employing numerical values shown in Expression 23 as G", r", $\zeta$"[i], $\tau$"[i] and by employing each of $\delta$' and $\tau$ as $\delta$" and $\tau$".

(Expression 23)

$$G'' = E \bullet (\prod_{i \in H \cup I \cup J} E'[i])$$

$$r = \beta + (\sum_{i \in H \cup I \cup J} r[i])$$

$$\{\xi[i]\}_{i \in H \cup I}$$

$$\{\tau[i]\}_{i \in I}$$

The generated digital signature data Signature is transmitted to the verification device 20 along with a question Q shown in following Expression 24.

(Expression 24)

$$Q = (M, \{\chi[i]\}_{i \in H \cup I \cup J}, \{\zeta'[i]\}_{i \in I}, \text{ID of identification device having public key opk,}$$

ID of identification device having public key apk[$i_1$], ---, ID of identification device having public key apk[$i_m$])

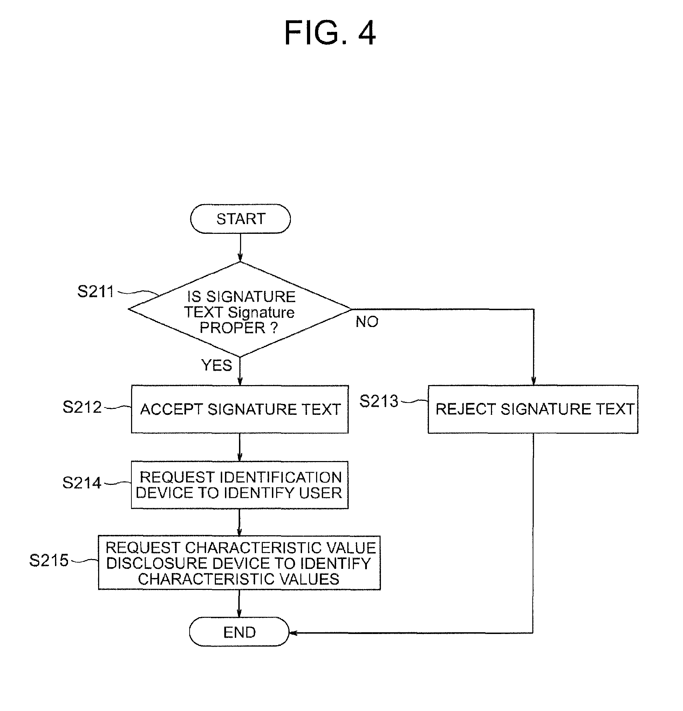

The verification device 20 checks that the signature text is generated by a proper method by the verification unit 120. FIG. 4 is a flowchart showing operations of the verification unit 120 shown in FIG. 1. The signature text verifying function 121 of the verification unit 120 first verifies whether or not the digital signature data "Signature" is proper (step S211), accepts it when it is proper, and rejects is if not (steps S212 to 213). The signature text verifying function 121 may display the verification result of acceptance or rejection on the display module 22. Alternatively, the signature text verifying function 121 may return the verification result to the user device 10 to be displayed on the input/output module 12 or may transfer it to another computer which performs processing executed after the authentication.

Further, when the digital signature data Signature is proper, the disclosure request function 122 of the verification unit 120 can transmit the query text Q and the digital signature data Signature to the identification device 30 to make a request to identify the user (step S214) and further can transmit those to the characteristic value disclosure device 40 to make a request to disclose the characteristic values as well (step S215) as necessary. The processing of steps S214 and S215 may not need to be executed when unnecessary.

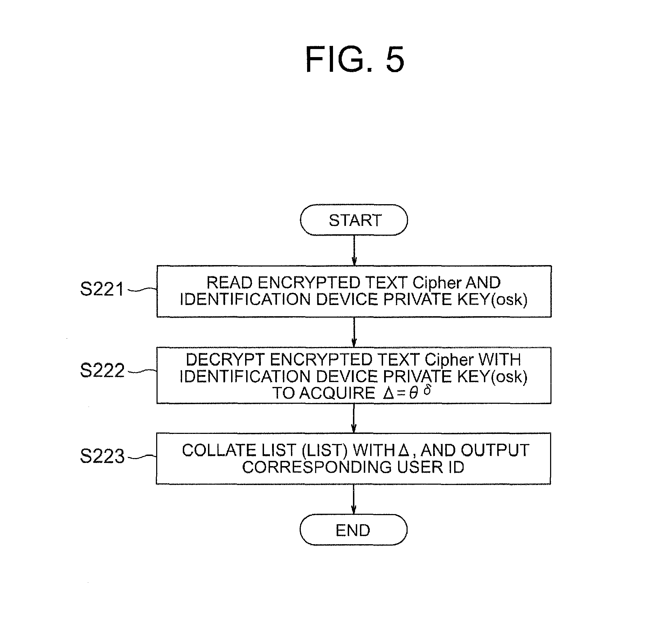

The identification device 30 identifies the signatory who generated the signature text by using the identification unit 130 in response to the request of step S214. FIG. 5 is a flowchart showing operations of the identification unit 130 shown in FIG. 1. The identification unit 130 first reads the encrypted text Cipher and the identification device private key (osk) 162 (step S221), decrypts Cipher generated in step S202 with Expression 18 by the identification device private key (osk) 162 to acquire the decrypted result $\Delta = \theta^{\wedge}\delta$ (step S222), collates it with the list (LIST) 183 to acquire the ID of the user whose public key is Δ, and outputs it to the verification device 20 (step S223).

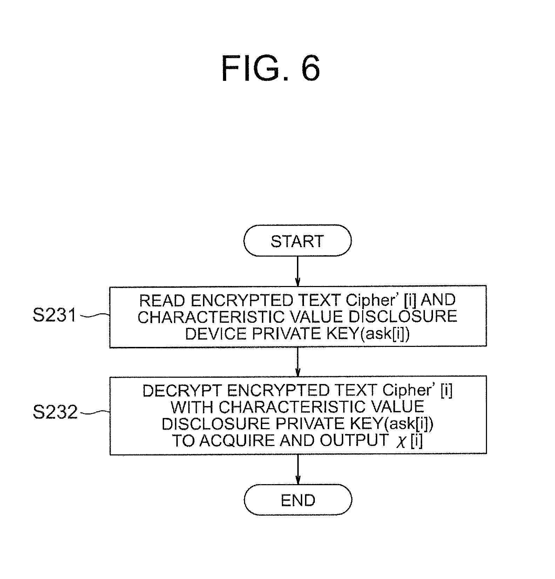

In response to the request of step S215, the characteristic value disclosure device 40 identifies the characteristic value $\chi[i]$ of the signatory who generated the signature text by using the characteristic value disclosure unit 140. FIG. 6 is a flowchart showing operations of the characteristic value disclosure unit 140 shown in FIG. 1.

The characteristic value disclosure unit 140 first reads Cipher'[i] and the characteristic value disclosure device private key (ask[i]) 172 (step S231), decrypts Cipher'[i] generated in step S203 with Expression 19 by the characteristic value disclosure device private key (ask[i]) 172 to acquire the decrypted result $\chi[i]$, and outputs it to the verification device 20 (step S232).

(Overall Operations of First Embodiment)

Next, overall operations of the first embodiment will be described. The anonymous credential method according to the embodiment is used in the anonymous credential system constituted by mutually connecting the user device belonging to a specific group, the verification device which certifies that the user device belongs to the group without identifying the discriminating information of the user device, the identification device which is authorized to identify the discriminating information, and the characteristic value disclosure device which is authorized to identify the characteristic value of the user, in which the user device: stores in advance the user device public key, the user device private key corresponding thereto, the group public key showing that the user device belongs to the user device, the member certificate generated by using the group private key corresponding to the group public key, the characteristic value certificate generated by using the characteristic values corresponding to each of the characteristics of the user and the user private key, the identification device public key of the identification device, and the characteristic value disclosure device public key of the characteristic value disclosure device; receives a plurality of subsets acquired by classifying a plurality of characteristics of the user as inputs (step S201); generates a first encrypted text in which the user device public key is encrypted with the identification device public key (step S202); generates a second encrypted text in which the characteristic value belonging to a specific subset among the subsets with the characteristic value disclosure device public key (step S203); generates a signature text of knowledge showing that data acquired by multiplying a part of the user device public key and the numerical values of the characteristic value certificates corresponding to each of all the characters satisfies a specific condition given in advance by using a part of the group public key and a part of the member certificate (step S204); and generates and outputs digital signature data containing the first and second encrypted text as well as the signature text of knowledge (step S205).

Further, the verification device upon receiving the digital signature data stores in advance the group public key and the identification device public key, extracts the first and second encrypted texts contained in the digital signature data received from the user device, and verifies whether or not the signature text of knowledge is proper by using the group public key (steps S211 to 213).

Note here that each of the above-described operation steps may be put into programs and have them executed by the user device 10 and the verification device 20 as the computers which directly execute each of the steps.
With such operations, the embodiment can provide following effects.

With the embodiment, the verification device can extract the first and second encrypted texts (Cipher and Cipher'[i]) contained in the digital signature data when the signature text of knowledge (Proof) contained in the digital signature data (Signature) is verified, and request the identification device having the private key corresponding to the identification device public key used when generating the encrypted text and to the characteristic value disclosure device having the private key corresponding to the characteristic value disclosure device public key to identify the user and to identify the characteristic value. Therefore, it is possible to handle the characteristic values that are not binary values but are specific numerical values with the digital signature data (Signature). This characteristic values can be handled only by the authorized user having the characteristic value disclosure device. Thus, as in the case of other anonymous credential systems, it is possible to certify that the characteristic value satisfies a specific condition while concealing the characteristic value itself.

(SECOND EMBODIMENT)

A second embodiment of the present invention is structured to adapt in a better manner to the actual operation mode while keeping the same basic structure of the entire anonymous credential system as that of the first embodiment. That is, a member certificate issuing device 360 which is authorized to add and cancel the user device to the group and a characteristic value certificate issuing device 370 which certifies that the characteristic value of the user device is true are added further.

With this embodiment, it is also possible to acquire the same effects as those of the first embodiment. At the same time, it is possible to add and cancel the user device to the group and further to certify the characteristic value of the user device, for example.

Hereinafter, it will be explained in more detail.

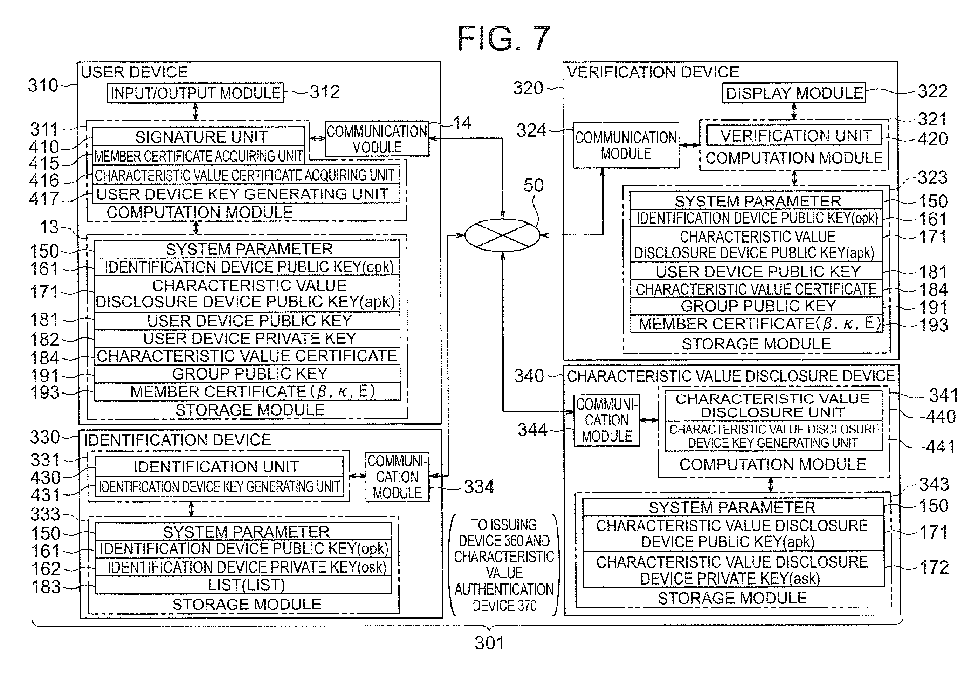

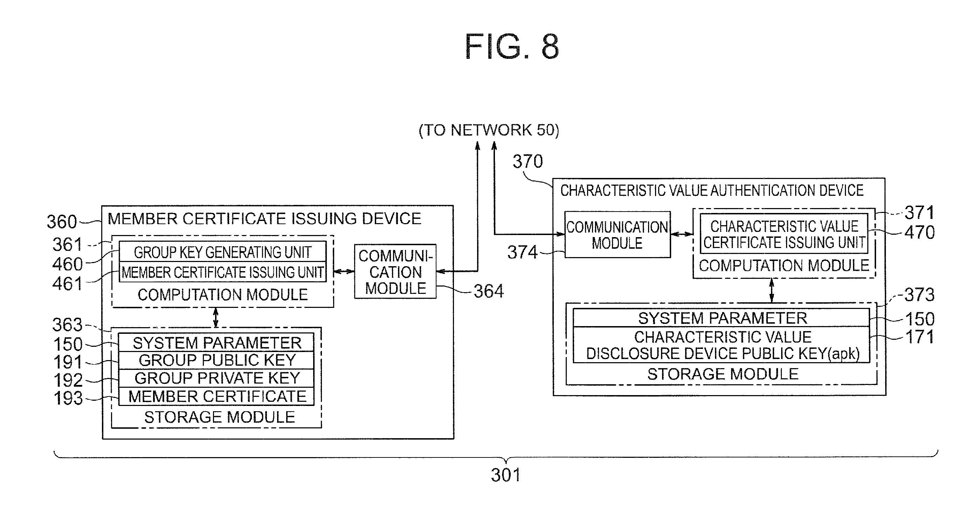

FIGS. 7 to 8 are explanatory charts showing the structure of an anonymous credential system 301 according to a second embodiment of the present invention. In addition to the anonymous credential system 1 according to the first embodiment, the anonymous credential system 301 is structured by mutually connecting a user device 310 as a computer device operated by the user, a verification device 430 as a computer device operated by the verifier, an identification device 330 and a characteristic value disclosure device 340 which operate according to a request from the verification device 320 via a network 50.

In addition to those, a member certificate issuing device 360 and a characteristic value certificate issuing device 370 are mutually connected to the anonymous credential system 310 via the network 50.

The structures of the user device 301, the verification device 320, the identification device 330, the characteristic value disclosure device 340 as hardware are the same as the structures of the user device 10, the identification device 30, and the characteristic value disclosure device 40 according to the first embodiment. That is, the user device 310 includes a computation module 311, an input/output module 312, a storage module 313, and a communication module 314. The verification device 320 includes a computation module 321, a storage module 323, and a communication module 324. The identification device 330 includes a computation module 331, a storage module 333, and a communication module 334. The characteristic value disclosure device 40 includes a computation module 341, a storage module 343, and a communication module 344.

Further, the structures of the member certificate issuing device 360 and the characteristic value certificate issuing device 370 as hardware are also the same. That is, the member certificate issuing device 360 includes a computation module 361, a storage module 363, and a communication module 364. The characteristic value certificate issuing device 370 also includes a computation module 371, a storage module 373, and a communication module 374.

In the computation module 311 of the user device 310, a member certificate acquiring unit 415, a characteristic value certificate acquiring unit 416, and a user device key generating unit 417 operate as computer programs in addition to a signature unit 410. In the computation module 321 of the verification device 320, a verification unit 420 operates as a computer program.

In the computation module 361 of the member certificate issuing device 360, a group key generating unit 460 and a member certificate issuing unit 461 operate as computer programs. Further, in the computation module 371 of the characteristic value certificate issuing device 370, a characteristic value certificate issuing unit 470 operates as a computer program.

The member certificate acquiring unit 415 of the user device 310 requests the member certificate issuing unit 461 of the member certificate issuing device 360 to add a member to an existing group. The characteristic value certificate acquiring unit 416 requests the characteristic value certificate issuing unit 470 of the characteristic value certificate issuing device 370 to issue a characteristic value certificate.

In the computation module 331 of the identification device 330, an identification unit 430 and an identification device key generating unit 431 operate as computer programs. The identification device key generating unit 431 generates the identification device public key (opk) 161 and an identification device private key (osk) 162. In the computation module 341 of the characteristic value disclosure device 340, a characteristic value disclosure device key generating unit 441 operates as a computer program in addition to a characteristic value disclosure unit 440. The characteristic value disclosure device key generating unit 441 generates the characteristic value disclosure device public key (apk) 171 and the characteristic value disclosure device public key (ask) 172.

The group key generating unit 460 of the member certificate issuing device 360 generates a group public key 191 and a private key 192 corresponding thereto. The member certificate issuing unit 461 performs adding, changing, or the like of a member to an existing group according to a request from the member certificate acquiring unit 451 of the user device 310, and issues the member certificate 193. The characteristic value certificate issuing unit 470 of the characteristic value certificate issuing device 370 issues the characteristic value certificate 184 according to a request from the characteristic value certificate acquiring unit 416 of the user device 310.

While each of the devices constituting the anonymous credential system 301 is illustrated as separate computer devices in FIGS. 7 to 8, two or more out of the characteristic value disclosure device 340, the identification device 330, the member certificate issuing device 360, and the characteristic value certificate issuing device 370 may be achieved by a physically same computer device. Further, a plurality of the characteristic value certificate issuing devices 370 may exist in a single anonymous credential system 301 depending on the characteristics.

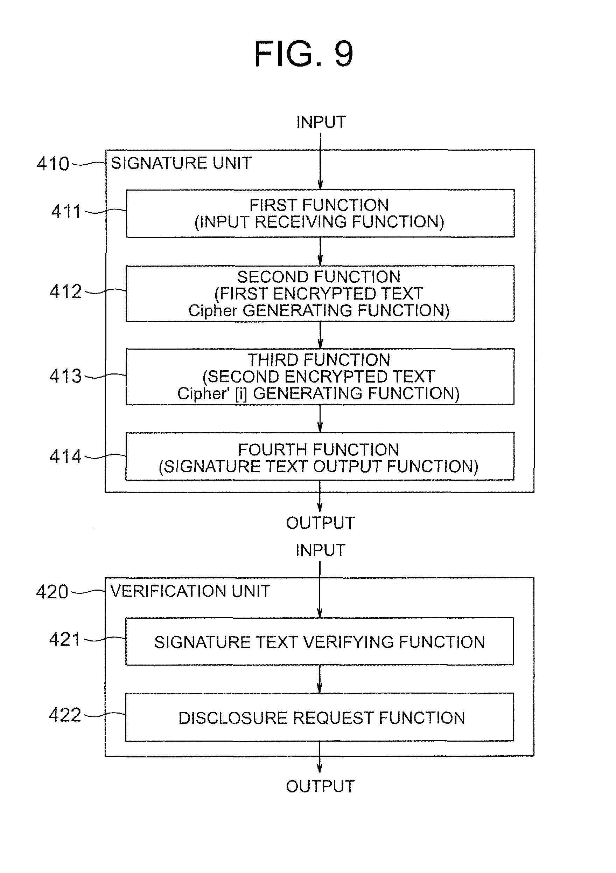

FIG. 9 is an explanatory chart showing the more detailed structures of the signature unit 410 and the verification unit 420 shown in FIGS. 7 to 8. The signature unit 410 includes: a first function (an input receiving function) 411; a second function (a first encrypted text generating function) 412; a third function (a second encrypted text generating function) 413; and a fourth function (a signature text output function) 414. The verification unit 420 includes a signature text verifying function 421 and a disclosure request function 422. The basic operations of each of those functions are roughly the same as the functions under the same names shown in the first embodiment. However, the detailed operations thereof will be described later.

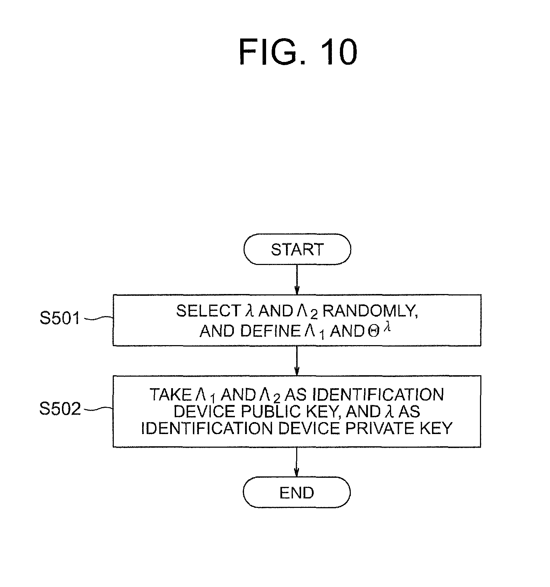

FIG. 10 is a flowchart showing the operations of the identification device key generating unit 431 shown in FIGS. 7 to 8. The identification public key (opk) 161 generated by the identification device key generating unit 431 is a set of two elements $\Lambda\_1$ and $\Lambda\_2$ of GRP', the identification device private key (osk) 162 is an element $\lambda$ of Z/qZ, and those satisfy following Expression 25.

(Expression 25)

$$\Lambda_1 = \Theta^{\lambda}$$

The identification device key generating unit 431 first randomly selects the element $\lambda$ of Z/qZ and the two elements $\Lambda\_1$ and $\Lambda\_2$ of GRP', and defines $\Lambda\_1$ to satisfy Expression 25 (step S501). Subsequently, the set of $\Lambda\_1$ and $\Lambda\_2$ is defined as the identification device public key (opk) 161, and $\lambda$ is defined as the identification device private key (osk) 162 (step S502). The identification device public key (opk) 161 is transferred and known to the other devices which constitute the anonymous credential system 301.

Provided that opk=($\Lambda\_1$, A\_2) is the identification device public key (opk) 161, $\Delta$ is an arbitrary element of GRP', and $\tau$ is an element of Z/qZ, an encryption function Enc and a decryption function Dec corresponding thereto are expressed by following Expression 26.

(Expression 26)

$$\text{Encryption function } \text{Enc}(opk, \Delta; \tau) = (\Delta\Theta^{\tau}, \Lambda_1^{\tau}, \Lambda_2^{\tau})$$

$$\text{Decryption function } \text{Dec}(osk, \text{Cipher}) = U_0 / U_1^{1/\lambda}$$

$$\text{where } osk = \lambda, \text{Cipher} = (U_0, U_1, U_2)$$

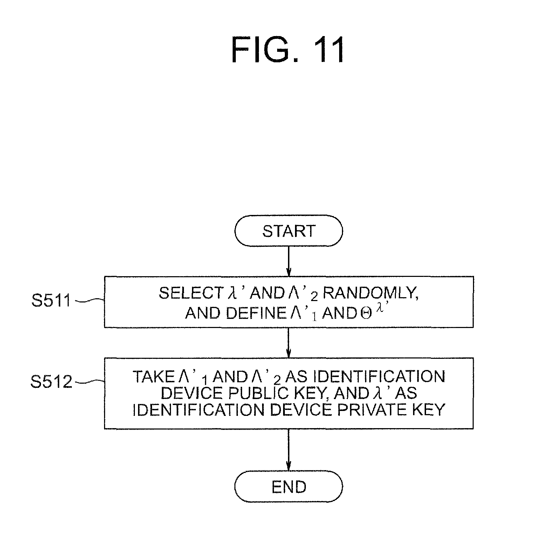

FIG. 11 is a flowchart showing operations of the characteristic value disclosure device key generating unit 441 shown in FIGS. 7 to 8 for generating the characteristic value disclosure device public key (apk) 171. The characteristic value disclosure device public key (apk) 171 generated by the characteristic value disclosure device key generating unit 441 is a set of two elements $\Lambda'\_1$ and $\Lambda'\_2$ of GRP', the characteristic value disclosure device private key (ask) 172 is an element $\lambda$ of Z/qZ, and those satisfy following Expression 27.

(Expression 27)

$$\Lambda'_1 = \Theta^{\lambda'}$$

The characteristic value disclosure device key generating unit 441 first randomly selects the element $\lambda'$ of Z/qZ and the element $\Lambda'\_2$ of GRP', and defines $\Lambda'\_1$ to satisfy Expression 27 (step S511). Subsequently, the set of $\Lambda'\_1$ and $\Lambda'\_2$ is defined as the characteristic value disclosure device public key (apk) 171, and $\lambda'$ is defined as the characteristic value disclosure device public key (ask) 172 (step S512). The characteristic value disclosure device public key (apk) 171 is transferred and known to the other devices which constitute the anonymous credential system 301.

Provided that apk=($\Lambda'\_1$, $\Lambda'\_2$) is the characteristic value disclosure device public key and that $\zeta$ and $\tau'$ are

elements of Z/qZ, an encryption function Enc' and a decryption function Dec' (ask, Cipher) corresponding thereto are expressed by following Expression 28.

(Expression 28)

$$\text{Encryption function} \quad Enc'(apk, \Delta'; \tau') = (\Delta\Theta^{\xi+\tau'}, \Lambda'_1{}^{\tau'}, \Lambda'_2{}^{\tau'})$$

$$\text{Decryption function} \quad Dec'(ask, Cipher) = U'_0 \Big/ U'_1{}^{1/\lambda'}$$

$$\text{where} \quad ask = \lambda', Cipher = (U'_0, U'_1, U'_2)$$

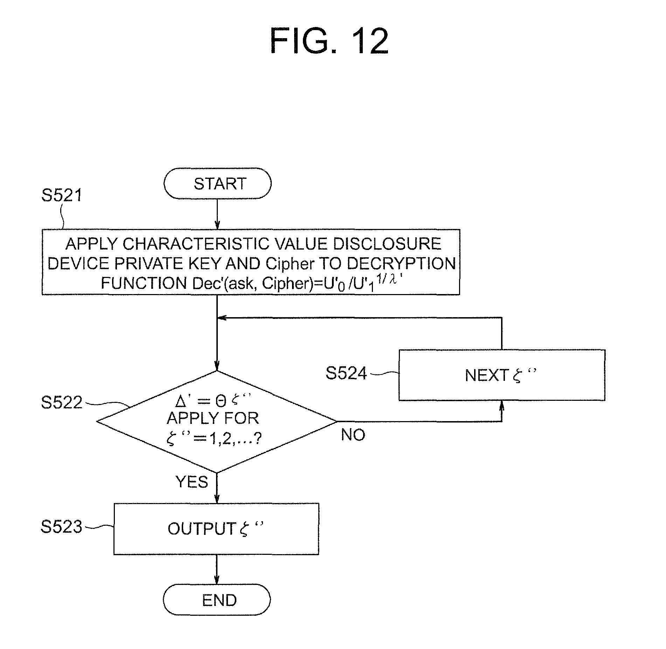

FIG. 12 is a flowchart showing operations of the characteristic value disclosure device key generating unit 441 shown in FIGS. 7 to 8 for generating the characteristic value disclosure device private key (ask) 172. The characteristic value disclosure device key generating unit 441 applies the characteristic value disclosure device private key (ask) 172 and Cipher to the second equation of Expression 28 (step S521), judges whether or not $\Delta'=\Theta^{\wedge}\zeta''$ applies for $\zeta''=1, 2, ---$ (step S522), and when judged that it applies, outputs $\zeta''$ and ends the processing (step S523). When judged that it does not apply, the value of $\zeta''$ is changed (step S524), and the judgment of step S522 is repeated.

The decryption function Dec' cannot always be calculated efficiently. However, in a case where Cipher is an encrypted text acquired by encrypting a plain text $\zeta$ of short bit length, the calculation of Dec' becomes efficient. Therefore, the embodiment is effective for a case where the bit length of each characteristic value that may possibly be decrypted is short.

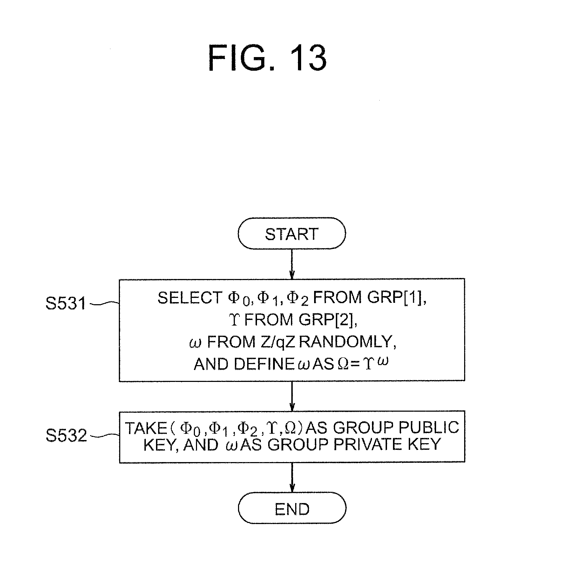

FIG. 13 is a flowchart showing operations of the group key generating unit 460 shown in FIGS. 7 to 8. The group key generating unit 460 randomly selects $\Phi\_0, \Phi\_1, \Phi\_2$ from GRP[1], randomly selects Y from GRP[2], randomly selects $\omega$ from Z/qZ, and defines as $\Omega=Y^{\wedge}\omega$ (step S531). Then, a set constituted with $\Phi\_0, \Phi\_1, \Phi\_2, Y, \Omega$ is defined as the group public key 191, and $\omega$ is defined as the group private key 192 (step S532).

The group public key 191 is transferred and known to the other devices which constitute the anonymous credential system 301. The group private key 192 is transferred only to the characteristic value certificate issuing device 370.

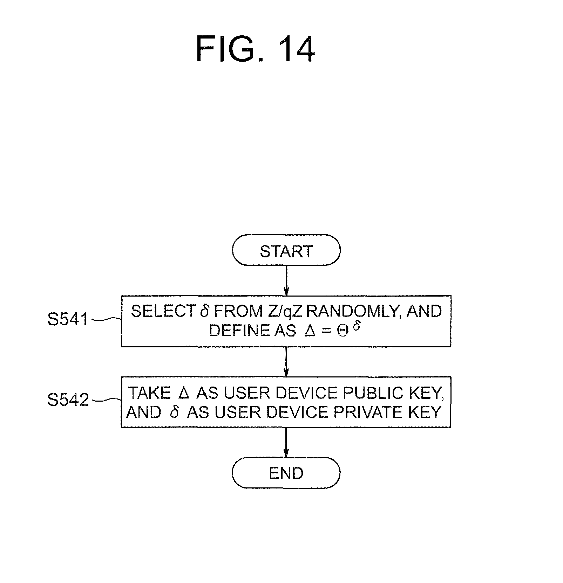

FIG. 14 is a flowchart showing operations of the user device key generating unit 417 shown in FIGS. 7 to 8. The user device key generating unit 417 generates a user device public key 181 and a user device private key 182 by the following procedures. First, $\delta$ is randomly selected from Z/qZ, and $\Delta=\theta^{\wedge}\delta$ is defined (step S541). This $\Delta$ is taken as the user device public key 181, and $\delta$ is taken as the user device private key 182 (step S542). The user device public key 181 is transferred and known to the other devices which constitute the anonymous credential system 301, and also stored to the list (LIST) 183 of the identification device 330.

When the member certificate issuing device 360 and the user device 310 execute the member certificate issuing unit 461 and the member certificate acquiring unit 415, the user device 310 can be added to the group.

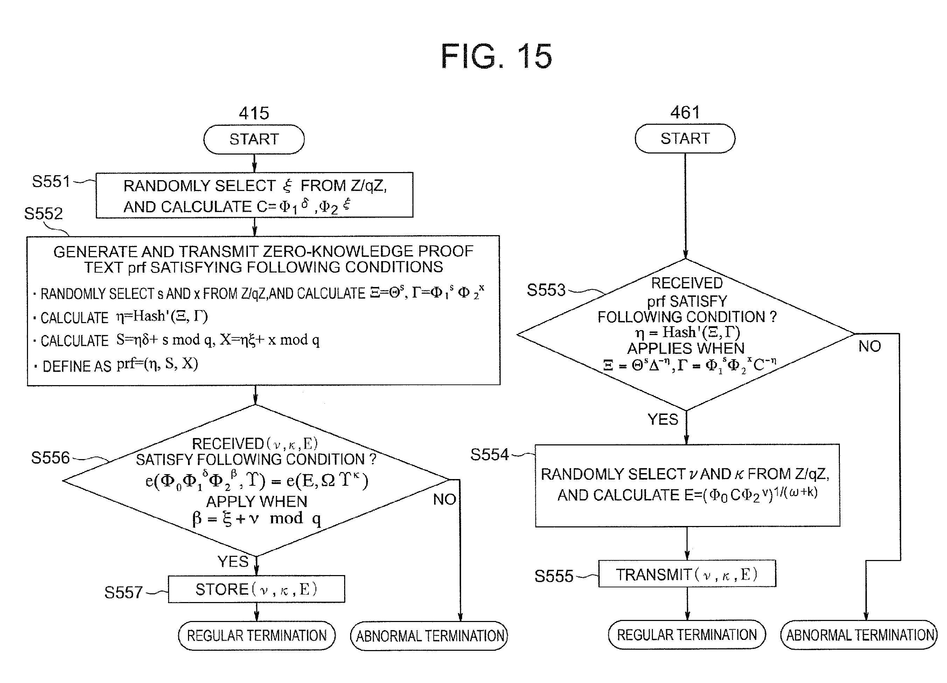

FIG. 15 is a flowchart showing operations of the member certificate issuing unit 461 and the member certificate acquiring unit 415 shown in FIGS. 7 to 8. First, the member certificate acquiring unit 415 randomly selects $\xi$ from Z/qZ, and calculates C that is expressed by following Expression 29 (step S551).

(Expression 29)

$$C = \Phi_1{}^{\delta}\Phi_2{}^{\xi}$$

Subsequently, the member certificate acquiring unit 415 generates a zero-knowledge proof text prf showing that C and $\Delta$ are generated by a proper method by using the method shown in following Expression 30 ($\Delta$, C, prf), and transmits it to the member certificate issuing device 360 (step S552).

(Expression 30)

- Randomly select $s$ and $x$ from $Z/qZ$, and calculate $\Xi=\Theta^{S'}$, $\Gamma=\Phi_1^S \Phi_2^X$

- Calculate $\eta=Hash`(\Xi, \Gamma)$

- Calculate $S=\eta\delta+ s \bmod q$, $X=\eta\xi+ x \bmod q$

- Define as prf$=(\eta, S, X)$

The member certificate issuing unit 461 of the member certificate issuing device 360 upon receiving it certifies whether or not the received prf is proper by using the condition shown in following Expression 31 (step S553).
(Expression 31)

- Calculate $\Xi=\Theta^S \Delta^{-\eta}$, $\Gamma=\Phi_1^S \Phi_2^X C^{-\eta}$

- Receive prf if $\eta=Hash`(\Xi, \Gamma)$, and reject if not

When prf is not proper, the member certificate issuing unit 461 issues an error and executes abnormal termination. When proper, $\nu$ and $\kappa$ are randomly selected from $Z/qZ$, and E shown in Expression 32 is calculated (step S554).
(Expression 32)

$$E = (\Phi_0 C \Phi_2^{\nu})^{1/(\omega+\kappa)}$$

Subsequently, the member certificate issuing unit 461 adds a set of ID of the user device 10 and $\Delta$ to the list (LIST) 183 (step S555), and transmits $(\nu, \kappa, E)$ to the user device 310 (step S556).

In the user device 310 that has received $(\nu, \kappa, E)$, the member certificate acquiring unit 415 judges whether or not the condition shown in following Expression 33 applies (step S557). When the condition does not apply, the member certificate acquiring unit 415 issues an error and executes abnormal termination. When the condition applies, the member certificate acquiring unit 415 stores $(\nu, \kappa, E)$ as the member certificate 193 (step S558), and ends the processing.
(Expression 33)

- Calculate $\beta = \xi + \nu \bmod q$

- Judge whether or not $e(\Phi_0 \Phi_1^\delta \Phi_2^\beta, \Upsilon) = e(E, \Omega \Upsilon^\kappa)$

When the characteristic value certificate issuing device 370 and the user device 310 execute the characteristic value certificate issuing unit 470 and the characteristic value certificate acquiring unit 416, respectively, it is possible to issue the characteristic value certificate 184 which proves that the characteristic value for the characteristic $\chi[i]$ of the user device 310 is $\zeta[i]$.

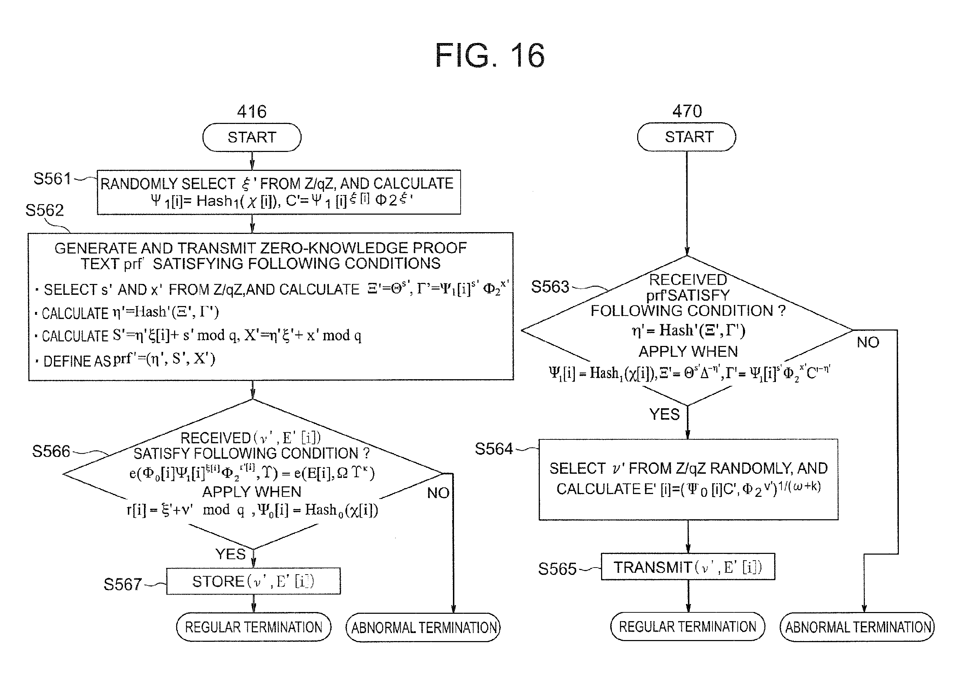

FIG. 16 is a flowchart showing operations of the characteristic value certificate issuing unit 470 and the characteristic value certificate acquiring unit 416 shown in FIGS. 7 to 8. Assuming that $\kappa$ is a part of the member certificate 193 of the user device 310, the operation thereof can be expressed as follows. First, the characteristic value certificate acquiring unit 416 of the user device 310 randomly selects $\xi'$ from Z/qZ, and calculates $\Psi\_1[i]$ and C' shown in Expression 34 (step S561).

(Expression 34)

$$\Psi_1[i] = \text{Hash}_1(\chi[i])$$

$$C' = \Psi_1[i]^{\xi[i]} \Phi_2^{\xi'}$$

Subsequently, the characteristic value certificate acquiring unit 416 generates a zero-knowledge proof text prf' shown in Expression 35 indicating that C' and $\Delta$ are generated by a proper method, and transmits ($\Delta$, C', prf') to the member certificate issuing device 360 (step S562).

(Expression 35)

- Randomly select s' and x' from Z/qZ, and calculate $\Xi' = \Theta^{s'}$, $\Gamma' = \Psi_1[i]^{s'} \Phi_2^{x'}$

- Calculate $\eta' = \text{Hash}'(\Xi', \Gamma')$

- Calculate $S' = \eta'\xi[i] + s' \bmod q$, $X' = \eta'\xi' + x' \bmod q$

- Define as prf' = $(\eta', S', X')$

The characteristic value certificate issuing unit 470 of the member certificate issuing device 360 upon receiving it certifies whether or not the received prf' is proper by using the condition shown in following Expression 36 (step S563).

(Expression 36)

- Calculate $\Psi_1[i] = \text{Hash}_1(\chi[i])$, $\Xi' = \Theta^{s'} \Delta^{-\eta'}$, $\Gamma' = \Psi_1[i]^{s'} \Phi_2^{x'} C'^{-\eta'}$

- Receive prf' if $\eta = \text{Hash}'(\Xi', \Gamma')$, and reject if not

When prf' is not proper, the characteristic value certificate issuing unit 470 issues an error and executes abnormal termination. When proper, v' is randomly selected from Z/qZ, calculates $\Psi\_0[i]$ and E'[i] shown in Expression 37 (step S564), and transmits (v', E'[i]) to the user device 310(step S565).

(Expression 37)

$$\Psi_0[i] = \mathrm{Hash}_0(\chi[i])$$

$$E'[i] = (\Psi_0[i]C'\Phi_2{}^{\nu'})^{1/(\omega+\kappa)}$$

In the user device 310 that has received (v', E' [i]), the characteristic value certificate acquiring unit 416 judges whether or not (v', E'[i]) satisfies the condition shown in following Expression 38 (step S566). When the condition is not satisfied, the characteristic value certificate acquiring unit 416 issues an error and executes abnormal termination.
(Expression 38)

- Calculate $r[i] = \xi' + \nu' \mod q$, $\Psi_0[i] = \mathrm{Hash}_0(\chi[i])$

- Judge whether or not $e(\Phi_0[i]\Psi_1[i]^{\xi[i]}\Phi_2{}^{r'[i]}, \Upsilon) = e(E[i], \Omega\Upsilon^\kappa)$

When the condition is satisfied, the characteristic value certificate acquiring unit 416 stores the received (r[i], E'[i]) as the characteristic value certificate 184 (step S567), and ends the processing.

It is not specifically an issue how the characteristic value certificate issuing device 370 acquires the member certificate 193 containing $\kappa$, since it is not the scope of the present invention. However, from the viewpoints of the security, it is necessary for the characteristic value certificate issuing device 370 to check that $\kappa$ is actually a part of the member certificate 193 of the user device 10 by using some kinds of method. For example, actually considered are: a method with which the member certificate issuing device 360 gives a signature to $\kappa$, and the characteristic value certificate issuing device 370 checks the signature; and a method with which the member certificate issuing device 360 discloses in advance a corresponding table of the user devices 10 and $\kappa$.

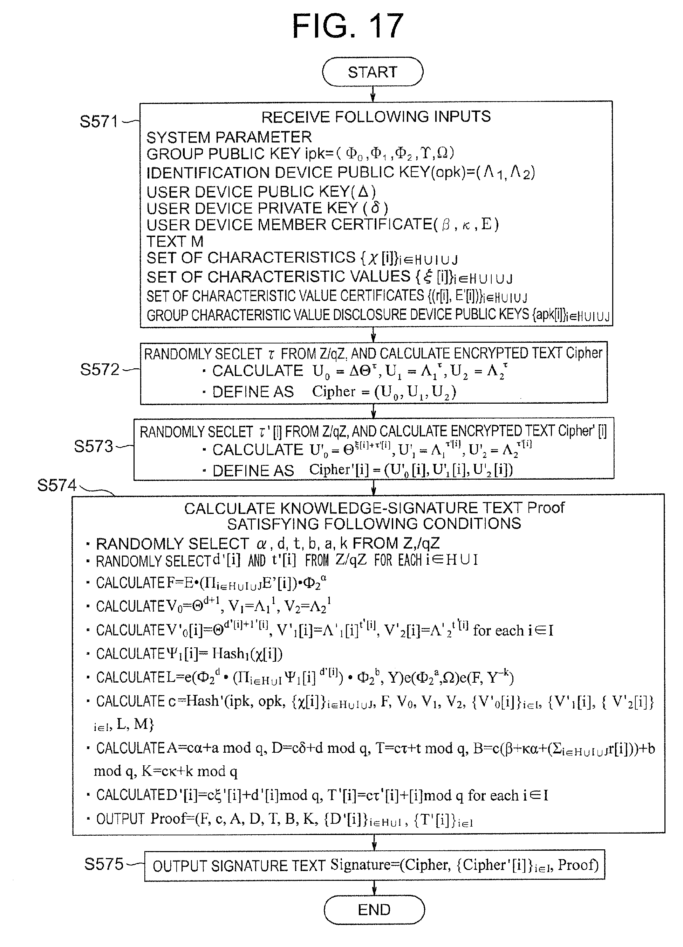

FIG. 17 is a flowchart showing operations of the signature unit 410 shown in FIGS. 7 to 8. $\chi[1]$, ---, $\chi[N]$ are the characteristics of the user device 310. The first function (the input receiving function) 411 of the signature unit 410 first receives a system parameter 150, the group public key 191, the identification device public key (opk) 161, the user device public key ($\Delta$) 181, the user device private key ($\delta$) 182, the member certificate 193 ($\beta$, $\kappa$, E), the document M, a set of the characteristics of the user device 310 {$\chi[i]$}, a set of the characteristic values of those characteristics {$\zeta[i]$}, a set of the characteristic value certificate 184 {(r[i], E'[i])}, and a set {apk[i]} of the characteristic value disclosure device public key (apk) 171 shown in following Expression 39 as inputs (step S571). Note here that H, I, and J are different arbitrary subsets of a set {1, ---, N}, and are same as those described in the first embodiment.
(Expression 39)

Group public key ipk=($\Phi_0$, $\Phi_1$, $\Phi_2$,Y, $\Omega$)

Public key opk=($\Lambda_1$, $\Lambda_2$) of identification device 21

Public key $\Delta$ of user device 22, private key $\delta$, member certificate ($\beta$, $\kappa$, E)

Set of characteristics of user device 22 $\{\chi[i]\}_{i \in H \cup I \cup J}$

Set of characteristic values of the characteristics $\{\xi[i]\}_{i \in H \cup I \cup J}$

Set of characteristic value certificates of the characteristic values $\{(r[i], E'[i])\}_{i \in H \cup I \cup J}$

Set of public keys of characteristic value disclosure devices $\{apk[i]\}_{i \in H \cup I \cup J}$

Then, the second function (the first encrypted text generating function) 412 of the signature unit 410 randomly selects $\tau$ from Z/qZ, and calculates the encrypted text Cipher acquired by encrypting $\Delta$ by the following procedure shown in following Expression 40 (step S572).
(Expression 40)

$$- \text{Calculate } U_0 = \Delta\Theta^{\tau}, U_1 = \Lambda_1^{\tau}, U_2 = \Lambda_2^{\tau}$$
$$- \text{Define as } \text{Cipher} = (U_0, U_1, U_2)$$

Subsequently, the third function (the second encrypted text generating function) 413 of the signature unit 410 randomly selects $\tau'[i]$ from Z/qZ for each $i \in I$, and calculates the encrypted text Cipher'[i] that is acquired by encrypting $\zeta[i]$ for each characteristic value shown in following Expression 41 (step S573).
(Expression 41)

$$- \text{Calculate } U'_0 = \Theta^{\xi[i]+\tau'[i]}, U'_1 = \Lambda_1^{\tau'[i]}, U'_2 = \Lambda_2^{\tau'[i]}$$
$$- \text{Define as } \text{Cipher}'[i] = (U'_0[i], U'_1[i], U'_2[i])$$

The fourth function (the signature text output function) 414 of the signature unit 410 calculates signature of knowledge Proof by the procedure shown in following Expression 42 (step S574).
(Expression 42)

- Randomly select a, d, t, b, a, k from $Z_q/qZ$

- Randomly select d'[i] and t'[i] from $Z/qZ$ for each $i \in H \cup I \cup J$

- Calculate $F = E \cdot (\prod_{i \in H \cup I \cup J} E'[i]) \cdot \Phi_2^{\alpha}$

- Calculate $V_0 = \Theta^{d+t}, V_1 = \Lambda_1^t, V_2 = \Lambda_2^t$

- Calculate $V'_0[i] = \Theta^{d'[i]+t'[i]}, V'_1[i] = \Lambda'_1[i]^{t'[i]}, V'_2[i] = \Lambda'_2^{t'[i]}$, for each $i \in I$

- Calculate $\Psi_1[i] = Hash_1(\chi[i])$

- Calculate $L = e(\Phi_1^d \cdot (\prod_{i \in H \cup I} \Psi_1[i]^{d'[i]}) \cdot \Phi_2^b, \Upsilon) e(\Phi_2^a, \Omega) e(F, \Upsilon^{-k})$

- Calculate $c = Hash'(ipk, opk, \{\chi[i]\}_{i \in H \cup I \cup J}, F, V_0, V_1, V_2, \{V'_0[i]\}_{i \in I},$
$\{V'_1[i]\}_{i \in I}, \{V'_2[i]\}_{i \in I}, L, M)$

- Calculate $A = c\alpha + a \bmod q, D = c\delta + d \bmod q, T = c\tau + t \bmod q,$

$B = c(\beta + \kappa\alpha + (\sum_{i \in H \cup I \cup J} r[i])) + b \bmod q,$

$K = c\kappa + k \bmod q$

- Calculate $D'[i] = c\xi'[i] + d'[i] \bmod q, T'[i] = c\tau'[i] + t'[i] \bmod q$
for each $i \in I$

- Output $Proof = (F, c, A, D, T, B, K, \{D'[i]\}_{i \in H \cup I}, \{T'[i]\}_{i \in I}$

Then, the fourth function (the signature text output function) 414 of the signature unit 410 outputs the digital signature data Signature acquired at last shown in following Expression 43 to the verification device 320 (step S575), and ends the processing. Since $\Delta = \Theta^\delta$, it is also possible to do a calculation by having U_0 as $U\_0 = \Theta^{(\delta+\tau)}$.

(Expression 43)

$$\text{Sinnature} = (\text{Cipher}, \{\text{Cipher'}[i]\}_{i \in I}, \text{Proof})$$

When executing the operation by the signature unit 410, the user device 310 uses the system parameter 150, the group public key 191, the identification device public key (opk) 161, the user device public key 181, the user device private key 182, and the member certificate 193 stored in the own storage unit 311.

Further, the user can use those arbitrarily selected by the user from the characteristics given to the user device 10 as the set of the characteristics $\{\chi[i]\}$, can use the characteristic values and the characteristic value certificates 184 corresponding to those characteristics. The individual, group, or the program operating the user device 310 can arbitrarily decide which of the characteristics to use. The way of deciding it is not a technical issue, so that it is not included in the scope of the preset invention.

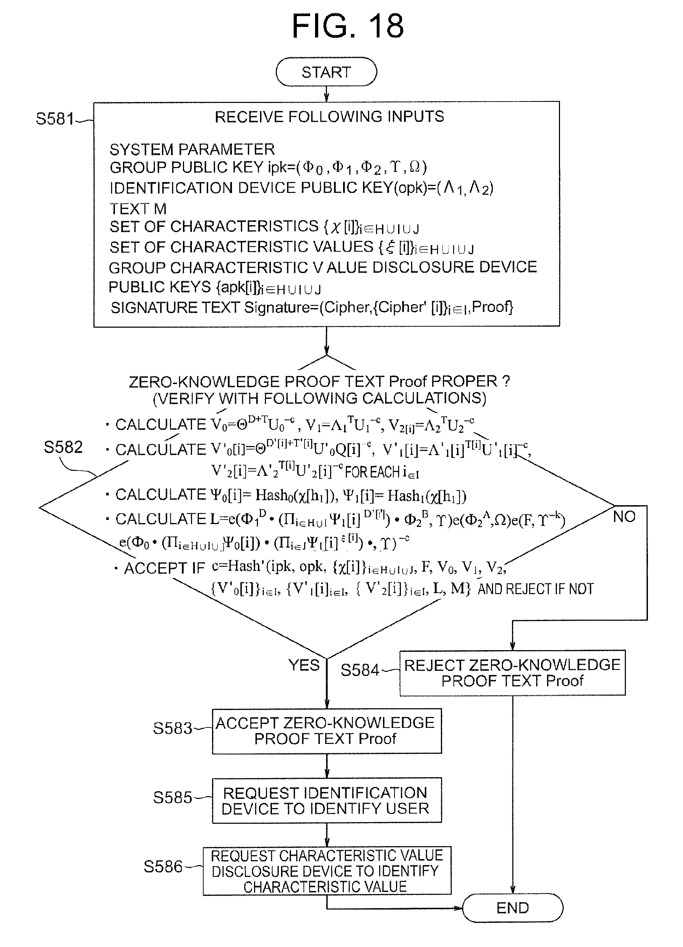

FIG. 18 is a flowchart showing operations of the verification unit 420 shown in FIGS. 7 to 8. The signature text verifying function 421 of the verification unit 420 receives the system parameter 150, the group public key (ipk) 191, the identification device public key (opk) 481, the document M, a set of the characteristics $\{\chi[i]\}$, a set of the characteristic values $\{\zeta[i]\}$, a set $\{apk[i]\}$ of the characteristic value disclosure device public key (apk) 171, and the digital signature data Signature shown in following Expression 44 as inputs (step S581).

(Expression 44)

Group public key $ipk=(\Phi_0, \Phi_1, \Phi_2, Y, \Omega)$

Public key $opk=(\Lambda_1, \Lambda_2)$ of identification device

Set of characteristics $\{\chi[i]\}_{i \in H \cup I \cup J}$

Set of characteristic values $\{\xi[i]\}_{i \in J}$

Set of public keys of characteristic value disclosure devices $\{apk[i]\}_{i \in I}$

Signature text Signature=(Cipher, $\{\text{Cipher'}[i]\}_{i \in I}$, Proof)

In the explanations below, the encrypted text Cipher, Cipher'[i], and the zero-knowledge proof text Proof are defined as in following Expression 45.

(Expression 45)

$$\mathrm{Cipher} = (U_0, U_1, U_2)$$

$$\mathrm{Cipher'}[i] = (U'_0[i], U'_1[i], U'_2[i])$$

$$\mathrm{Proof} = (F, c, A, D, T, B, K, \{D'[i]\}_{i \in I \cup I}, \{T'[i]\}_{i \in I})$$

Subsequently, the signature text verifying function 421 of the verification unit 420 verifies whether or not the zero-knowledge proof text Proof is proper by the procedure shown in following Expression 46 (step S582). When proper, it is received. If not, it is rejected, and abnormal termination is executed (steps S583 to 584). The signature text verifying function 421 may display the verified result of acceptance or rejection on the display module 322, may return the verified result to the user device 310 and display it on the input/output module 312, or may transfer it to another computer that performs processing following the authentication.

(Expression 46)

- Calculate $V_0 = \Theta^{D+T} U_0^{-c}, V_1 = \Lambda_1^{T} U_1^{-c}, V_2[i] = \Lambda_2^{T} U_2^{-c}$

- Calculate $V'_0[i] = \Theta^{D[i]+T[i]} U'_0 Q[i]^{-c}, V'_1[i] = \Lambda'_1[i]^{T[i]} U'_1[i]^{-c},$

$$V'_2[i] = \Lambda'_2{}^{T[i]} U'_2[i]^{-c} \text{ for each } i \in I$$

- Calculate $\Psi_0[i] = \mathrm{Hash}_0(\chi[h_1]), \Psi_1[i] = \mathrm{Hash}_1(\chi[h_1])$

- Calculate $L = e(\Phi_1^{D} \bullet (\prod_{i \in I \cup I} \Psi_1[i]^{D[i]}) \bullet \Phi_2^{B}, T)e(\Phi_2^{A}, \Omega)e(F, T^{-K})$

$$e(\Phi_0 \bullet (\prod_{i \in I \cup I \cup I} \Psi_0[i]) \bullet (\prod_{i \in I} \Psi_1[i]^{\xi[i]}) \bullet, T)^{-c}$$

- Receive when $c = \mathrm{Hash'}(\mathrm{ipk}, \mathrm{opk}, \{\chi[i]\}_{i \in I \cup I \cup I}, F, V_0, V_1, V_2, \{V'_0[i]\}_{i \in I},$

$$\{V'_1[i]\}_{i \in I}, \{V'_2[i]\}_{i \in I}, L, M), \text{ and reject if not}$$

Further, when the digital signature data Signature is proper, the disclosure request function 422 of the verification unit 420 can transmit a query text Q and the digital signature data Signature to the identification device 430 to make a request to identify the user (step S585), and further can transmit those to the characteristic value disclosure device 440 to make a request to disclose the characteristic value as well (step S586). The processing of step S585 and S586 do not need to be executed when unnecessary.

When executing the operation by the verification unit 420, the verification device 320 uses the system parameter 150, the group public key 191, the identification device public key (opk) 161 stored in the own storage unit 321, and further uses the document M, the characteristics, the characteristic values, and the signature text received from the user device 310.

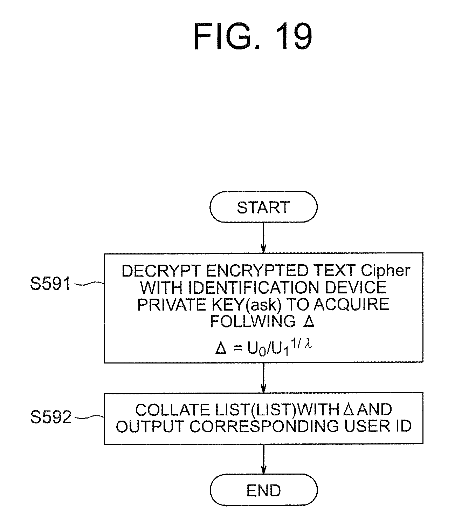

FIG. 19 is a flowchart showing operations of the identification unit 430 shown in FIGS. 7 to 8. Provided that the identification device public key (opk) 481, the encrypted text Cipher, and the digital signature data Signature are defined as in following Expression 47, the identification unit 430 first calculates the decryption result $\Delta$ of the encrypted text Cipher shown in following Expression 48 (step S591).

(Expression 47)

$$opk = (\Lambda_1, \Lambda_2)$$

$$Signature = (Cipher, \{Cipher'[i]\}_{i \in I}, Pr\,oof)$$

$$Cipher = (U_0, U_1, U_2)$$

(Expression 48)

$$\Delta = U_0 / U_1^{1/\lambda}$$

Then, the identification unit 430 acquires the ID of the user whose public key is $\Delta$ by collating it with the list (LIST) 183, and outputs it to the verification device 420 (step S592).

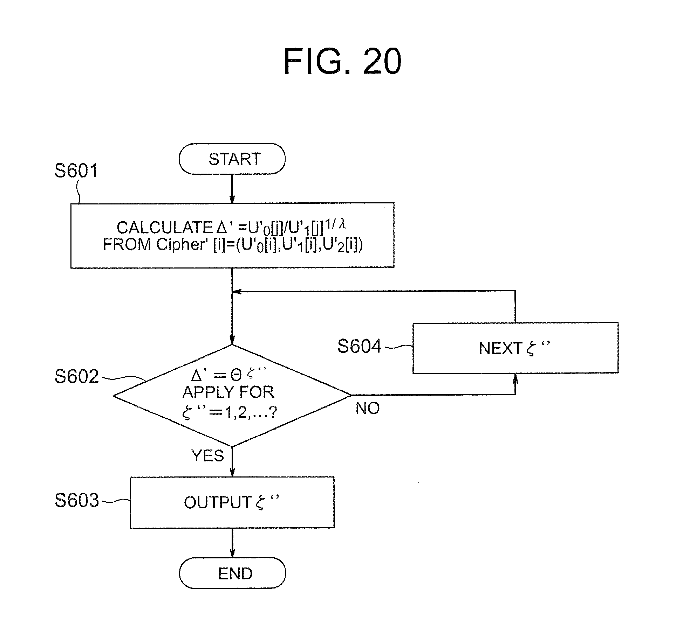

FIG. 20 is a flowchart showing operations of the characteristic value disclosure unit 440 shown in FIGS. 7 to 8. When defining the characteristic value disclosure device public key (apk) 491, the encrypted text Cipher'[i], and the digital signature data Signature as in following Expression 49 and further defining the characteristic value disclosure device private key (ask) 172 as $\lambda'$, the characteristic value disclosure unit 440 increments $\xi''$ by "1" until $\Delta'$ becomes equal to $\Theta^{\hat{}}\xi''$ by the calculation shown in following Expression 50 and, when it becomes equal, outputs $\xi''$ to the verification device 420 and ends the processing (steps S601 to 604).

(Expression 49)

$$apk[j] = (\Lambda_1[j], \Lambda_2[j])$$

$$Signature = (Cipher, \{Cipher'[i]\}_{i \in I}, Pr\,oof)$$

$$Cipher'[i] = (U'_0[i], U'_1[i], U'_2[i])$$

(Expression 50)

- Calculate $\Delta' = U'_0[J]/ U'_1U'[j]^{1/\lambda}$ from Cipher'$[i]=(U'_0[i], U'_1[i], U'_2[i])$

- Judge whether or not $\Delta'=\Theta\xi''$ applies for $\xi''=1, 2, ---,$

when judged as $\Delta'=\Theta\xi''$, output $\xi''$ and stop

While the present invention has been described by referring to the specific embodiments illustrated in the drawings, the present invention is not limited only to those embodiments described above. Any other known structures can be employed, as long as the effects of the present invention can be achieved therewith.

Regarding each of the embodiments described above, the new technical contents of the above-described embodiments can be summarized as follows. While a part of or a whole part of the embodiments can be summarized as follows as the new techniques, the present invention is not necessarily limited only to the followings.

The programs of the computer are recorded to non-transitory recording media.

(Supplementary Note 1)

An anonymous credential system which includes, in a mutually-connected manner: a user device belonging to a specific group; a verification device which verifies that the user device belongs to the group without identifying discriminating information of the user device; an identification device which is authorized to identify the discriminating information; and a characteristic value disclosure device which is authorized to identify characteristic values of the user, wherein:

the user device includes
a storage module which stores in advance a user device public key, a user device private key corresponding thereto, a group public key showing that the user device belongs to the group, a member certificate generated by using a group private key corresponding to the group public key, a characteristic value certificate generated by using characteristic values corresponding to each of the characteristics of the user and the user private key, an identification device public key of the identification device, and a characteristic value disclosure device public key of the characteristic value disclosure device; and a signature unit which generates and transmits digital signature data to an authentication device,
the member certificate contains a numerical value E acquired by performing modular exponentiation by using a reciprocal of data $\rho$ generated from the group private key $\pi$ and a part $\kappa$ of the member certificate on the multiple that is acquired by multiplying a numerical value acquired by performing modular exponentiation on a part $\Phi\_1$ of group public key with the user private key $\delta$, a numerical value acquired by performing modular exponentiation on another part $\Phi\_2$ of group public key with a part $\beta$ of the member certificate, and still another part $\Phi\_0$ of the group public key;
the characteristic value certificate corresponding to the i-th $\chi[i]$ of the characteristics contains a numerical value E'$[i]$ acquired by performing modular exponentiation by using a reciprocal of the $\rho$ on the multiple that is acquired by multiplying a numerical value acquired by performing modular exponentiation on data $\Psi\_1[i]$ acquired from the $\chi[i]$ with the $\delta$, a numerical value acquired by performing modular exponentiation on date $\Psi2$ acquired from the $\chi[i]$ with a part r$[i]$ of the characteristic certificate, and data $\Psi\_0[i]$ acquired from the characteristic $\chi[i]$;
the signature unit includes:

a first function which receives as inputs a plurality of subsets in which a plurality of characteristics of the users are classified; a second function which generates a first encrypted text acquired by encrypting the user device public key with the identification device public key; a third function which generates a second encrypted text acquired by encrypting the characteristic values belonging to a specific subset among the subsets with the characteristic value disclosure device public key; and a fourth function which generates a signature text of knowledge showing that the data acquired by multiplying a part of the user device public key with the numerical values of the characteristic value certificate corresponding to each of all the characteristics satisfies a specific condition given in advance by using a part of the group public key and a part of the member certificate, generates the digital signature data containing the first and second encrypted texts as well as the signature text of knowledge, and outputs it to the verification device;

provided that a random number used when the third function of the signature unit generates the second encrypted text is $\tau[i]$, a numerical value acquired by multiplying the E'[i] corresponding to $\chi[i]$ with the E is G, and a numerical value acquired by adding all r[i] corresponding to all the characteristics $\chi[i]$ and then adding $\beta$ thereto is r, the fourth function of the signature unit generates a signature text of knowledge showing that the G, the r, the characteristic value $\zeta[i]$ belonging to the specific subset, the random number $\tau$ used when the second function generates the first encrypted text, and $\tau'[i]$ satisfy the specific given condition; and
the verification device includes:

a storage module which stores in advance the group public key and the identification device public key;
a signature text verifying function which extracts the first and second encrypted texts contained in the digital signature data received from the user device, and verifies whether or not the signature text of knowledge is proper by using the group public key; and
a disclosure request function which transfers the first encrypted text to the identification device having an identification device private key corresponding to the identification device public key to make a request to identify the discriminating information of the user device, and transfers the second encrypted text to the characteristic value disclosure device having a characteristic value disclosure device private key corresponding to the characteristic value disclosure device public key to make a request to identify the characteristic value.

(Supplementary Note 2)

The anonymous credential system as depicted in Supplementary note 1, wherein:

the group public key contains data such as Y and $\Omega$ in addition to $\Phi\_0$, $\Phi\_1$, $\Phi\_2$, and a plurality of subsets contain a first subset which discloses only the characteristics, a second subset which discloses the characteristics and takes the characteristic values as the subject of encryption, and a third subset which discloses the characteristics and the characteristic values. The fourth function of the signature unit: first randomly selects $\alpha$, d, b, a, k from Z/qZ; further selects d'[i] randomly for the characteristics $\chi[i]$ belonging to the first and second subsets; defines the numerical value acquired by multiplying E'[i] corresponding to all the characteristics $\chi[i]$, E, and a numerical value acquired by performing modular exponentiation on $\Phi\_2$ with $\alpha$ as F; subsequently defines a numerical value acquired by multiplying a numerical value acquired by pairing Y with a numerical value that is acquired by multiplying a value acquired by multiplying $\psi\_1[i]$ corresponding to the characteristics $\chi[i]$ belonging to the first and second subsets with a numerical value acquired by performing modular exponentiation with d'[i], a numerical value acquired by performing modular exponentiation on $\Phi\_1$ with d, and a numerical value acquired by performing modular exponentiation on $\Phi\_2$ with b, a numerical value acquired by pairing $\Omega$ with a value acquired by performing modular exponentiation on $\Phi\_2$ with a, and a numerical value acquired by pairing F with a numerical value acquired by performing modular exponentiation on Y with k of an inverted sign as L; defines a hash value of data containing F and L as c; defines a numerical value acquired by dividing a numerical value acquired by adding a to a numerical value acquired by multiplying $\alpha$ with c by a prescribed modulus as A; defines a numerical value acquired by dividing a numerical value acquired by adding d to a numerical value acquired by multiplying $\delta$ with c by a prescribed modulus as D; defines a numerical value acquired by dividing a numerical value acquired by adding k to a numerical value acquired by multiplying $\kappa$ with c by a prescribed modulus as K; defines a numerical value acquired by adding the $\beta$ to a numerical value acquired by adding all r[i] corresponding to all the characteristics $\chi[i]$, multiplying the c to a numerical value acquired by adding a product of $\kappa$ and $\alpha$ thereto, and dividing the b by a prescribed modulus as B; defines a numerical value acquired by dividing a numerical value acquired by adding d'[i] to a numerical value acquired by multiplying $\xi[i]$ and c to each i corresponding to the characteristics $\chi[i]$ belonging to the first and second subsets with a prescribed modulus as D'[i]; and outputs data containing the F, the c, the A, the D, the T, the B, the K and the D'[i] as a signature text.

(Supplementary Note 3)

The anonymous credential system as depicted in Supplementary Note 2, wherein:

the user device public key contains data $\Delta$;
the second function of the signature unit generates the first encrypted text Cipher that is the encrypted text of the $\Delta$;
the third function of the signature unit generates the second encrypted text Cipher'[i] that is the encrypted text of the $\zeta[i]$ for $\chi[i]$ belonging to the first subset; and
the fourth function of the signature unit generates the signature text of knowledge containing the Cipher and the Cipher'[i].

(Supplementary Note 4)

The anonymous credential system as depicted in Supplementary Note 3, wherein:

the user device public key and the user device private key are defined as $\Delta$ and $\delta$, and the $\Delta$ is defined as a numerical value acquired by performing modular exponentiation on a numerical value $\Theta$ given in advance with the $\delta$;
provided that the identification device public key is $(\Lambda\_1, \Lambda\_2)$ and the characteristic value disclosure device public key corresponding to each $\chi[i]$ belonging to the first subset is $(\Lambda'\_1, \Lambda'\_2)$,
the second function of the signature unit randomly selects $\tau$, defines a numerical value acquired by multiplying the $\Delta$ with a numerical value acquired by performing modular exponentiation on the $\Theta$ with the $\tau$ as U_0, a numerical value acquired by performing modular exponentiation on the A_1 with the $\tau$ as U_1, and a numerical value acquired by performing modular exponentiation on the $\Lambda\_2$ with the $\tau$ as U_2;
the third function of the signature unit randomly selects $\tau'[i]$ for each $\chi[i]$ belonging to the second subset, defines a numerical value acquired by performing modular exponentiation on the $\Theta$ with the a numerical value acquired by adding the $\tau'[i]$ to the $\zeta[i]$ as U'_1, a numerical value acquired by performing modular exponentiation on the $\Lambda'\_1$ with the $\tau'[i]$ as U'_1 and a numerical value acquired by performing modular exponentiation on the $\Lambda'\_2$ with the $\tau'[i]$ as U'_2;
the fourth function of the signature unit randomly selects t'[i] for each $\chi[i]$ belonging to the second subset, defines a numerical value acquired by performing modular exponentiation on the $\Theta$ with a numerical value acquired by adding the t to the d as V_0, a numerical value acquired by performing modular exponentiation on the A_1 with the t as V_1, and a numerical value acquired by performing modular exponentiation on the A_2 with the t as V_2;
defines a numerical value acquired by performing modular exponentiation on the $\Theta$ with a numerical value acquired by adding the t'[i] to the d'[i] as V'_0[i] for each i corresponding to each $\chi[i]$ belonging to the second subset, a numerical value acquired by performing modular exponentiation on the A'_1[i] with the t'[i] as V'_1[i], and a numerical value acquired by performing modular exponentiation on the A'_2[i] with the t'[i] as V'_2[i], a numerical value acquired by dividing a numerical value acquired by adding the t to a numerical value acquired by multiplying the $\tau$ and the c by a prescribed modulus as T, a numerical value acquired by dividing a numerical value acquired by adding the t'[i] to a numerical value acquired by multiplying the $\tau'[i]$ and the c' by a prescribed modulus as T'[i] for each i corresponding to each $\chi[i]$ belonging to the second subset; and
generates the signature text of knowledge containing the U_0, the U_1, the U_2, the U'_0[i], the U'_1 [i], the U'_2 [i], the V_0, the V_1, the V_2, the V'_0[i], the V'_1 [i], the V'_2[i], the T, and the T'[i].

(Supplementary Note 5)

The anonymous credential system as depicted in Supplementary Note 1, wherein:

the signature text verifying function of the verification device calculates data $\Psi\_0[i]$ and $\Psi\_1[i]$ from each characteristic $\chi[i]$ belonging to all the subsets;
subsequently defines a numerical value acquired by multiplying the $\Phi\_0$ on a numerical value acquired by pairing the Y with a product that is acquired by performing modular exponentiation on the $\Psi\_1[i]$ with the D'[i] for $\chi[i]$ belonging to the first and second subsets, a product acquired by performing modular exponentiation on the $\Phi1$ with the D and a numerical value acquired by performing modular exponentiation on the $\Phi2$ with B, a numerical value acquired by pairing the $\Omega$ with a value acquired by performing modular exponentiation on the $\Phi\_2$ with the A, a numerical value acquired by pairing the Y with k of an inverted sign and the F, and a numerical value acquired by performing modular exponentiation with $\zeta[i]$ on a product of $\Psi\_1[i]$ corresponding to $\chi[i]$ belonging to all the subsets and $\Psi\_1[i]$ corresponding to $\chi[i]$ belonging to the third subset as L; and
subsequently accepts the signature text when a hash value of data containing the F and the L equals to c, and rejects it if not.

(Supplementary Note 6)

The anonymous credential system as depicted in Supplementary Note 5, wherein:

provided that other data contained in the signature text is (U_0, U_1, U_2, U'_0[i], U'_1 [i], U'_2[i]),
the signature text verifying function of the verification device defines a product of a numerical value acquired by performing modular exponentiation on the $\Theta$ with a numerical value acquired by adding the D to T and a numerical value acquired by performing modular exponentiation on the U_0 with the c as V_0, a product of a numerical value acquired by performing modular exponentiation on the A_1 with the T and a numerical value acquired by performing modular exponentiation on the U_1 with the c as V_1, and a product of a numerical value acquired by performing modular exponentiation on the $\Lambda$_2 with the T and a numerical value acquired by performing modular exponentiation on the U_2 with the c as V_2;

defines a product of a numerical value acquired by performing modular exponentiation on the $\Theta$ with a numerical value acquired by adding the D'[i] to T'[i] and a numerical value acquired by performing modular exponentiation on the U'_0[i] with the c' as V'_0[i] for $\chi$[i] belonging to the second subset, a product of a numerical value acquired by performing modular exponentiation on the $\Lambda$_1[i] with the T'[i] and a numerical value acquired by performing modular exponentiation on the U'_1[i] with the c as V'_1[i], and a product of a numerical value acquired by performing modular exponentiation on the $\Lambda$'_2[i] with the T'[i] and a numerical value acquired by performing modular exponentiation on the U'_2[i] with the c as V_2[i], and

calculates a hash value of the data containing V_0, V_1, V_2 and V'_0[i], V'_1[i], V'_2[i] for $\chi$[i] belonging to the second subset, and judges whether or not it is equal to the c.

(Supplementary Note 7)

A user device belonging to a specific group and constituting an anonymous credential system which includes, in a mutually-connected manner, a verification device which verifies that the user device belongs to the group without identifying discriminating information of the user device, an identification device which is authorized to identify the discriminating information, and a characteristic value disclosure device which is authorized to identify characteristic values of the user, and the user device includes:

a storage module which stores in advance a user device public key, a user device private key corresponding thereto, a group public key showing that the user device belongs to the group, a member certificate generated by using a group private key corresponding to the group public key, a characteristic value certificate generated by using characteristic values corresponding to each of the characteristics of the user and the user private key, an identification device public key of the identification device, and a characteristic value disclosure device public key of the characteristic value disclosure device; and a signature unit which generates and transmits digital signature data to an authentication device, wherein

the member certificate contains a numerical value E acquired by performing modular exponentiation by using a reciprocal of data $\rho$ generated from the group private key $\pi$ and a part $\kappa$ of the member certificate on the multiple that is acquired by multiplying a numerical value acquired by performing modular exponentiation on a part $\Phi$_1 of group public key with the user private key $\delta$, a numerical value acquired by performing modular exponentiation on another part $\Phi$_2 of group public key with a part $\beta$ of the member certificate, and still another part $\Phi$_0 of the group public key;

the characteristic value certificate corresponding to the i-th $\chi$[i] of the characteristics contains a numerical value E'[i] acquired by performing modular exponentiation by using a reciprocal of the $\rho$ on the multiple that is acquired by multiplying a numerical value acquired by performing modular exponentiation on data $\Psi$_1[i] acquired from the $\chi$[i] with the $\delta$, a numerical value acquired by performing modular exponentiation on data $\Psi$2 acquired from the $\chi$[i] with a part r[i] of the characteristic certificate, and data $\Psi$_0[i] acquired from the characteristics $\chi$[i];

the signature unit includes:

a first function which receives as inputs a plurality of subsets in which a plurality of characteristics of the users are classified; a second function which generates a first encrypted text acquired by encrypting the user device public key with the identification device public key; a third function which generates a second encrypted text acquired by encrypting the characteristic values belonging to a specific subset among the subsets with the characteristic value disclosure device public key; and a fourth function which generates a signature text of knowledge showing that the data acquired by multiplying a part of the user device public key with the numerical values of the characteristic value certificate corresponding to each of all the characteristics satisfies a specific condition given in advance by using a part of the group public key and a part of the member certificate, generates digital signature data containing the first and second encrypted texts as well as the signature text of knowledge, and outputs it to the verification device; and

provided that a random number used when the third function of the signature unit generates the second encrypted text is $\tau$[i], a numerical value acquired by multiplying the E'[i] corresponding to $\chi$[i] with the E is G, and a numerical value acquired by adding all r[i] corresponding to all the characteristics $\chi$[i] and then adding $\beta$ thereto is r, the fourth function of the signature unit generates a signature text of knowledge showing that the G, the r, the characteristic value $\zeta$[i] belonging to the specific subset, the random number $\tau$ used when the second function generates the first encrypted text, and $\tau'[i]$ satisfy the specific given condition

(Supplementary Note 8)

The user device as depicted in Supplementary Note 7, wherein:

the group public key contains data such as Y and $\Omega$ in addition to $\Phi_0$, $\Phi_1$, $\Phi_2$, and the plurality of subsets contain a first subset which discloses only the characteristics, a second subset which discloses the characteristics and takes the characteristic values as the subject of encryption, and a third subset which discloses the characteristics and the characteristic values; and

the fourth function of the signature unit: first randomly selects $\alpha$, d, b, a, k from Z/qZ; further selects d'[i] randomly for the characteristics $\chi[i]$ belonging to the first and second subsets; defines a numerical value acquired by multiplying E'[i] corresponding to all the characteristics $\chi[i]$, E, and a numerical value acquired by performing modular exponentiation on the $\Phi_2$ with the $\alpha$ as F;

subsequently defines a numerical value acquired by multiplying a numerical value acquired by pairing Y with a numerical value that is acquired by multiplying a numerical value acquired by multiplying $\Psi_1[i]$ corresponding to the characteristics $\chi[i]$ belonging to the first and second subsets with a numerical value acquired by performing modular exponentiation with d'[i], a numerical value acquired by performing modular exponentiation on the $\Phi_1$ with the d, and a numerical value acquired by performing modular exponentiation on the $\Phi_2$ with the b, a numerical value acquired by pairing the $\Omega$ with a value acquired by performing modular exponentiation on the $\Phi_2$ with the a, and a numerical value acquired by pairing the F with a numerical value acquired by performing modular exponentiation on the Y with the k of an inverted sign as L;

defines a hash value of data containing the F and the L as c; defines a numerical value acquired by dividing a numerical value acquired by adding the a to a numerical value acquired by multiplying the $\alpha$ with the c by a prescribed modulus as A; defines a numerical value acquired by dividing a numerical value acquired by adding the d to a numerical value acquired by multiplying the $\delta$ with the c by a prescribed modulus as D; defines a numerical value acquired by dividing a numerical value acquired by adding the k to a numerical value acquired by multiplying the $\kappa$ with the c by a prescribed modulus as K;

defines a numerical value acquired by adding the $\beta$ to a numerical value acquired by adding all r[i] corresponding to all the characteristics $\chi[i]$, multiplying the c to a numerical value acquired by adding a product of $\kappa$ and $\alpha$ thereto, and dividing the b by a prescribed modulus as B;

defines a numerical value acquired by dividing a numerical value acquired by adding the d'[i] to a numerical value acquired by multiplying the $\zeta[i]$ and the c for each i corresponding to $\chi[i]$ belonging to the first and second subsets with a prescribed modulus as D'[i], and

outputs data containing the F, the c, the A, the D, the T, the B, the K and the D'[i] as a signature text.

(Supplementary Note 9)

A verification device which constitutes an anonymous credential system by being mutually connected to a user device belonging to a specific group, an identification device which is authorized to identify the discriminating information, and a characteristic value disclosure device which is authorized to identify characteristic values of the user, and verifies that the user device belongs to the group without identifying discriminating information of the constituting user device, and the verification device includes:

a storage module which stores in advance a user device public key, a user device private key corresponding thereto, a group public key showing that the user device belongs to the group, a member certificate generated by using a group private key corresponding to the group public key, a characteristic value certificate generated by using characteristic values corresponding to each of the characteristics of the user and the user private key, an identification device public key of the identification device, and a characteristic value disclosure device public key of the characteristic value disclosure device;

a storage module which stores in advance the group public key and the identification device public key;

a signature text verifying function which extracts the first and second encrypted texts contained in the digital signature data received from the user device, and verifies whether or not the signature text of knowledge is proper by using the group public key; and

a disclosure request function which transfers the first encrypted text to the identification device having an identification device private key corresponding to the identification device public key to make a request to identify the discriminating information of the user device, and further transfers the second encrypted text to the characteristic value disclosure device having a characteristic value disclosure device private key corresponding to the characteristic value disclosure device public key to make a request to identify the characteristic value.

(Supplementary Note 10)

The verification device as depicted in Supplementary Note 9, wherein:

the group public key contains each data of $\Phi\_0$, $\Phi\_1$, $\Phi\_2$, Y, and $\Omega$, the plurality of subsets contain a first subset which discloses only the characteristics, a second subset which discloses the characteristics and takes the characteristic values as the subject of encryption, and a third subset which discloses the characteristics and the characteristic values;

the signature text contains each data of F, c, A, D, B, K, and D'[i] for $\chi[i]$ belonging to the first and second subsets;

the signature text verifying function: calculates $\Psi\_0[i]$ and $\Psi\_1[i]$ from each characteristic $\chi[i]$ belonging to all the subsets;

subsequently defines a numerical value acquired by multiplying the $\Phi\_0$ on a numerical value acquired by pairing the Y with a product that is acquired by performing modular exponentiation on the $\Psi\_1[i]$ with the D'[i] for $\chi[i]$ belonging to the first and second subsets, a product acquired by performing modular exponentiation on the $\Phi1$ with the D and a numerical value acquired by performing modular exponentiation on the $\Phi2$ with B, a numerical value acquired by pairing the $\Omega$ with a value acquired by performing modular exponentiation on the $\Phi\_2$ with the A, a numerical value acquired by pairing the Y with k of an inverted sign and the F, and a numerical value acquired by performing modular exponentiation with $\zeta[i]$ on a product of $\Psi\_1[i]$ corresponding to $\chi[i]$ belonging to all the subsets and $\Psi\_1[i]$ corresponding to $\chi[i]$ belonging to the third subset as L; and

subsequently accepts the signature text when a hash value of data containing the F and the L equals to c, and rejects it if not.

(Supplementary Note 11)

An anonymous credential method used in an anonymous credential system which includes, in a mutually-connected manner, a user device belonging to a specific group, a verification device which verifies that the user device belongs to the group without identifying discriminating information of the user device, an identification device which is authorized to identify the discriminating information, and a characteristic value disclosure device which is authorized to identify characteristic values of the user, wherein

the user device executes each of processing contents of: storing in advance a user device public key, a user device private key corresponding thereto, a group public key showing that the user device belongs to the group, a member certificate containing a numerical value E acquired by performing modular exponentiation by using a reciprocal of data p generated from the group private key $\pi$ and a part $\kappa$ of the member certificate on the multiple that is acquired by multiplying a numerical value acquired by performing modular exponentiation on a part $\Phi\_1$ of group public key generated by using the group private key corresponding to the group public key with the user private key $\delta$, a numerical value acquired by performing modular exponentiation on another part $\Phi\_2$ of group public key with a part $\beta$ of the member certificate, and still another part $\Phi\_0$ of the group public key, a characteristic value certificate generated by using the user private key, which contains a characteristic value corresponding to the i-th $\chi[i]$ of the characteristic of the user, a numerical value E'[i] acquired by performing modular exponentiation by using a reciprocal of the $\rho$ on the multiple that is acquired by multiplying a numerical value acquired by performing modular exponentiation on data $\Psi\_1[i]$ acquired from the $\chi[i]$ with the $\delta$, a numerical value acquired by performing modular exponentiation on data $\Psi2$ acquired from the $\chi[i]$ with a part r[i] of the characteristic certificate, and data $\Psi\_0[i]$ acquired from the characteristics $\chi[i]$, an identification device public key of the identification device, and a characteristic value disclosure device public key of the characteristic value disclosure device;

receiving a plurality of subsets in which a plurality of characteristics of the users are classified as inputs;

generating a first encrypted text acquired by encrypting the user device public key with the identification device public key;

generating a second encrypted text acquired by encrypting the characteristic values belonging to a specific subset among the subsets with the characteristic value disclosure device public key; and

provided that a random number used when generating the second encrypted text is $\tau[i]$, a numerical value acquired by multiplying the E'[i] corresponding to $\chi[i]$ with the E is G, and a numerical value acquired by adding all r[i] corresponding to all the characteristics $\chi[i]$ and then adding $\beta$ thereto is r, generating a signature text of knowledge showing that the G, the r, the characteristic value $\zeta[i]$ belonging to the specific subset, the random number $\tau$ used when the second function generates the first encrypted text, and the $\tau'[i]$ satisfy the specific given condition by using a part of the group public key and a part of the member certificate, generating the digital signature data containing the first and second encrypted texts as well as the signature text of knowledge, and outputting it to the verification device; and

the verification device executes each of processing contents of:

storing in advance the group public key and the identification device public key;
extracting the first and second encrypted texts contained in the digital signature data received from the user device; and
verifying whether or not the signature text of knowledge is proper by using the group public key.

(Supplementary Note 12)

An anonymous credential program used in an anonymous credential system which includes, in a mutually-connected manner, a user device belonging to a specific group, a verification device which verifies that the user device belongs to the group without identifying discriminating information of the user device, an identification device which is authorized to identify the discriminating information, and a characteristic value disclosure device which is authorized to identify characteristic values of the user, the program causing a computer, which stores in advance a user device public key, a user device private key corresponding thereto, a group public key showing that the user device belongs to the group, a member certificate containing a numerical value E acquired by performing modular exponentiation by using a reciprocal of data p generated from the group private key $\pi$ and a part $\kappa$ of the member certificate on the multiple that is acquired by multiplying a numerical value acquired by performing modular exponentiation on a part $\Phi\_1$ of group public key generated by using the group private key corresponding to the group public key with the user private key $\delta$, a numerical value acquired by performing modular exponentiation on another part $\Phi\_2$ of group public key with a part $\beta$ of the member certificate, and still another part $\Phi\_0$ of the group public key, a characteristic value certificate generated by using the user private key, which contains a characteristic value corresponding to the i-th $\chi[i]$ of the characteristic of the user, a numerical value E'[i] acquired by performing modular exponentiation by using a reciprocal of the $\rho$ on the multiple that is acquired by multiplying a numerical value acquired by performing modular exponentiation on data $\Psi\_1$[i] acquired from the $\chi[i]$ with the $\delta$, a numerical value acquired by performing modular exponentiation on data $\Psi2$ acquired from the $\chi[i]$ with a part r[i] of the characteristic certificate, and data $\Psi\_0[i]$ acquired from the characteristics $\chi[i]$, an identification device public key of the identification device, and a characteristic value disclosure device public key of the characteristic value disclosure device, to execute:

a procedure of receiving a plurality of subsets in which a plurality of characteristics of the users are classified as inputs;
a procedure of generating a first encrypted text acquired by encrypting the user device public key with the identification device public key;
a procedure of generating a second encrypted text acquired by encrypting the characteristic values belonging to a specific subset among the subsets with the characteristic value disclosure device public key; and
provided that a random number used when generating the second encrypted text is $\tau[i]$, a numerical value acquired by multiplying the E'[i] corresponding to $\chi[i]$ with the E is G, and a numerical value acquired by adding all r[i] corresponding to all the characteristics $\chi[i]$ and then adding $\beta$ thereto is r, a procedure of generating a signature text of knowledge showing that the G, the r, the characteristic value $\zeta[i]$ belonging to the specific subset, the random number $\tau$ used when the second function generates the first encrypted text, and the $\tau'[i]$ satisfy the specific given condition by using a part of the group public key and a part of the member certificate, generating the digital signature data containing the first and second encrypted texts as well as the signature text of knowledge, and outputting it to the verification device.

This Application claims the Priority right based on Japanese Patent Application No. 2010-122797 filed on May 28, 2010 and the disclosure thereof is hereby incorporated by reference in its entirety.

INDUSTRIAL APPLICABILITY

The present invention can be broadly utilized in scenes where anonymous credential is used, particularly in scenes where it is necessary to prove that the characteristic value satisfies a specific condition. More specifically, the present invention can be utilized in scenes where it is necessary to verify that the user is not under age, e.g., use of a rental car, purchase of alcohol and cigarettes, entry to publicly operated gambling places and R-rated films.

REFERENCE NUMERALS

| | |
|---|---|
| 1 | Anonymous credential system |
| 10, 310 | User device |

(continued)

| | |
|---|---|
| 11, 21, 31, 41, 311, 321, 331, 341, 361, 371 | Computation module |
| 12, 312 | Input/output module |
| 13, 23, 33, 43, 313, 323, 333, 343, 363, 373 | Storage module |
| 14, 24, 34, 44, 314, 324, 334, 344, 364, 374 | Communication module |
| 20, 320 | Verification device |
| 22, 322 | Display module |
| 30, 330 | Identification device |
| 40, 340 | Characteristic value disclosure device |
| 50 | Network |
| 110, 410 | Signature unit |
| 111, 411 | First function (input receiving function) |
| 112, 412 | Second function (first encrypted text generating function) |
| 113, 413 | Third function (Second encrypted text generating function) |
| 114, 414 | Fourth function (Signature text output function) |
| 120, 420 | Verification unit |
| 121, 421 | Signature text verifying function |
| 122, 422 | Disclosure request function |
| 130, 430 | Identification unit |
| 140, 440 | Characteristic value disclosure unit |
| 150 | System parameter |
| 161 | Identification device public key (opk) |
| 162 | Identification device private key (osk) |
| 171 | Characteristic value disclosure device public key (apk) |
| 172 | Characteristic value disclosure device private key (ask) |
| 181 | User device public key |
| 182 | User device private key |
| 183 | List (LIST) |
| 184 | Characteristic value certificate |
| 191 | Group public key |
| 192 | Group private key |
| 193 | Member certificate |
| 360 | Member certificate issuing device |
| 370 | Characteristic value certificate issuing device |
| 415 | Member certificate acquiring unit |
| 416 | Characteristic value certificate acquiring unit |
| 417 | User device key generating unit |
| 431 | Identification device key generating unit |
| 441 | Characteristic value disclosure device key generating unit |
| 460 | Group key generating unit |
| 461 | Member certificate issuing unit |
| 470 | Characteristic value certificate issuing unit |

## Claims

1. An anonymous credential system, comprising, in a mutually-connected manner: a user device belonging to a specific group; verification means for verifying that the user device belongs to the group without identifying discriminating information of the user device; identification means for being authorized to identify the discriminating information; and characteristic value disclosure means for being authorized two identify characteristic values of the user, wherein:

   the user device comprises
   storage means for storing in advance a user device public key, a user device private key corresponding thereto, a group public key showing that the user device belongs to the group, a member certificate generated by using a group private key corresponding to the group public key, a characteristic value certificate generated by using characteristic values corresponding to each of the characteristics of the user and the user private key, an identification means public key of the identification means, and a characteristic value disclosure means public key of the characteristic value disclosure means; and a signature means for generating and transmitting digital signature data to an authentication device,

the member certificate contains a numerical value E acquired by performing modular exponentiation by using a reciprocal of data $\rho$ generated from the group private key $\pi$ and a part $\kappa$ of the member certificate on the multiple that is acquired by multiplying a numerical value acquired by performing modular exponentiation on a part $\Phi\_1$ of group public key with the user private key $\delta$, a numerical value acquired by performing modular exponentiation on another part $\Phi\_2$ of group public key with a part $\beta$ of the member certificate, and still another part $\Phi\_0$ of the group public key;

the characteristic value certificate corresponding to the i-th $\chi[i]$ of the characteristics contains a numerical value E'[i] acquired by performing modular exponentiation by using a reciprocal of the $\rho$ on the multiple that is acquired by multiplying a numerical value acquired by performing modular exponentiation on data $\Psi\_1[i]$ acquired from the $\chi[i]$ with the $\delta$, a numerical value acquired by performing modular exponentiation on data $\Psi 2$ acquired from the $\chi[i]$ with a part r[i] of the characteristic certificate, and data $\Psi\_0[i]$ acquired from the characteristic $\chi[i]$;

the signature means includes:

> a first function which receives as inputs a plurality of subsets in which a plurality of characteristics of the users are classified; a second function which generates a first encrypted text acquired by encrypting the user device public key with the identification means public key; a third function which generates a second encrypted text acquired by encrypting the characteristic values belonging to a specific subset among the subsets with the characteristic value disclosure means public key; and a fourth function which generates a signature text of knowledge showing that the data acquired by multiplying a part of the user device public key with the numerical values of the characteristic value certificate corresponding to each of all the characteristics satisfies a specific condition given in advance by using a part of the group public key and a part of the member certificate, generates the digital signature data containing the first and second encrypted texts as well as the signature text of knowledge, and outputs it to the verification means;
>
> provided that a random number used when the third function of the signature means generates the second encrypted text is $\tau[i]$, a numerical value acquired by multiplying the E'[i] corresponding to $\chi[i]$ with the E is G, and a numerical value acquired by adding all r[i] corresponding to all the characteristics $\chi[i]$ and then adding $\beta$ thereto is r, the fourth function of the signature means generates a signature text of knowledge showing that the G, the r, the characteristic value $\zeta[i]$ belonging to the specific subset, the random number $\tau$ used when the second function generates the first encrypted text, and $\tau'[i]$ satisfy the specific given condition; and
>
> the verification means comprises:

> > a storage module which stores in advance the group public key and the identification means public key; a signature text verifying function which extracts the first and second encrypted texts contained in the digital signature data received from the user device, and verifies whether or not the signature text of knowledge is proper by using the group public key; and
> >
> > a disclosure request function which transfers the first encrypted text to the identification means having an identification means private key corresponding to the identification means public key to make a request to identify the discriminating information of the user device, and transfers the second encrypted text to the characteristic value disclosure means having a characteristic value disclosure means private key corresponding to the characteristic value disclosure means public key to make a request to identify the characteristic value.

2. A user device belonging to a specific group and constituting an anonymous credential system which comprises, in a mutually-connected manner, a verification means for verifying that the user device belongs to the group without identifying discriminating information of the user device, identification means for being authorized to identify the discriminating information, and characteristic value disclosure means for being authorized to identify characteristic values of the user, the user device comprising:

> storage means for storing in advance a user device public key, a user device private key corresponding thereto, a group public key showing that the user device belongs to the group, a member certificate generated by using a group private key corresponding to the group public key, a characteristic value certificate generated by using characteristic values corresponding to each of the characteristics of the user and the user private key, an identification means public key of the identification means, and a characteristic value disclosure means public key of the characteristic value disclosure means; and a signature means for generating and transmitting digital signature data to an authentication device, wherein

the member certificate contains a numerical value E acquired by performing modular exponentiation by using a reciprocal of data $\rho$ generated from the group private key $\pi$ and a part $\kappa$ of the member certificate on the multiple that is acquired by multiplying a numerical value acquired by performing modular exponentiation on a part $\Phi\_1$ of group public key with the user private key $\delta$, a numerical value acquired by performing modular exponentiation on another part $\Phi\_2$ of group public key with a part $\beta$ of the member certificate, and still another part $\Phi\_0$ of the group public key;

the characteristic value certificate corresponding to the i-th $\chi[i]$ of the characteristics contains a numerical value E'[i] acquired by performing modular exponentiation by using a reciprocal of the $\rho$ on the multiple that is acquired by multiplying a numerical value acquired by performing modular exponentiation on data $\Psi\_1[i]$ acquired from the $\chi[i]$ with the $\delta$, a numerical value acquired by performing modular exponentiation on data $\Psi2$ acquired from the $\chi[i]$ with a part r[i] of the characteristic certificate, and data $\Psi\_0[i]$ acquired from the characteristics x[i];

the signature means includes:

a first function which receives as inputs a plurality of subsets in which a plurality of characteristics of the users are classified; a second function which generates a first encrypted text acquired by encrypting the user means public key with the identification means public key; a third function which generates a second encrypted text acquired by encrypting the characteristic values belonging to a specific subset among the subsets with the characteristic value disclosure means public key; and a fourth function which generates a signature text of knowledge showing that the data acquired by multiplying a part of the user device public key with the numerical values of the characteristic value certificate corresponding to each of all the characteristics satisfies a specific condition given in advance by using a part of the group public key and a part of the member certificate, generates digital signature data containing the first and second encrypted texts as well as the signature text of knowledge, and outputs it to the verification means; and

provided that a random number used when the third function of the signature means generates the second encrypted text is $\tau[i]$, a numerical value acquired by multiplying the E'[i] corresponding to $\chi[i]$ with the E is G, and a numerical value acquired by adding all r[i] corresponding to all the characteristics $\chi[i]$ and then adding $\beta$ thereto is r, the fourth function of the signature means generates a signature text of knowledge showing that the G, the r, the characteristic value $\zeta[i]$ belonging to the specific subset, the random number $\tau$ used when the second function generates the first encrypted text, and $\tau'[i]$ satisfy the specific given condition.

3.  The user device as claimed in claim 2, wherein:

the group public key contains data such as Y and $\Omega$ in addition to $\Phi\_0$, $\Phi\_1$, $\Phi\_2$, and the plurality of subsets contain a first subset which discloses only the characteristics, a second subset which discloses the characteristics and takes the characteristic values as the subject of encryption, and a third subset which discloses the characteristics and the characteristic values; and

the fourth function of the signature means: first randomly selects $\alpha$, d, b, a, k from Z/qZ; further selects d'[i] randomly for the characteristics $\chi[i]$ belonging to the first and second subsets; defines a numerical value acquired by multiplying E'[i] corresponding to all the characteristics $\chi[i]$, E, and a numerical value acquired by performing modular exponentiation on the $\Phi\_2$ with the $\alpha$ as F;

subsequently defines a numerical value acquired by multiplying a numerical value acquired by pairing Y with a numerical value that is acquired by multiplying a numerical value acquired by multiplying $\Psi\_1[i]$ corresponding to the characteristics $\chi[i]$ belonging to the first and second subsets with a numerical value acquired by performing modular exponentiation with d'[i], a numerical value acquired by performing modular exponentiation on the $\Phi\_1$ with the d, and a numerical value acquired by performing modular exponentiation on the $\Phi\_2$ with the b, a numerical value acquired by pairing the $\Omega$ with a value acquired by performing modular exponentiation on the $\Phi\_2$ with the a, and a numerical value acquired by pairing the F with a numerical value acquired by performing modular exponentiation on the Y with the k of an inverted sign as L;

defines a hash value of data containing the F and the L as c; defines a numerical value acquired by dividing a numerical value acquired by adding the a to a numerical value acquired by multiplying the $\alpha$ with the c by a prescribed modulus as A; defines a numerical value acquired by dividing a numerical value acquired by adding the d to a numerical value acquired by multiplying the $\delta$ with the c by a prescribed modulus as D; defines a numerical value acquired by dividing a numerical value acquired by adding the k to a numerical value acquired

by multiplying the $\kappa$ with the c by a prescribed modulus as K;

defines a numerical value acquired by adding the $\beta$ to a numerical value acquired by adding all r[i] corresponding to all the characteristics $\chi$[i], multiplying the c to a numerical value acquired by adding a product of $\kappa$ and $\alpha$ thereto, and dividing the b by a prescribed modulus as B;

defines a numerical value acquired by dividing a numerical value acquired by adding the d'[i] to a numerical value acquired by multiplying the $\zeta$[i] and the c for each i corresponding to $\chi$[i] belonging to the first and second subsets with a prescribed modulus as D'[i]; and

outputs data containing the F, the c, the A, the D, the T, the B, the K and the D'[i] as a signature text.

4. Verification means which constitutes an anonymous credential system by being mutually connected to a user device belonging to a specific group, identification means for being authorized to identify the discriminating information, and characteristic value disclosure means for being authorized to identify characteristic values of the user, for verifying that the user device belongs to the group without identifying discriminating information of the constituting user device, the verification means comprising:

storage means for storing in advance a user device public key, a user device private key corresponding thereto, a group public key showing that the user device belongs to the group, a member certificate generated by using a group private key corresponding to the group public key, a characteristic value certificate generated by using characteristic values corresponding to each of the characteristics of the user and the user private key, an identification means public key of the identification means, and a characteristic value disclosure means public key of the characteristic value disclosure means;

a storage module which stores in advance the group public key and the identification device public key;

a signature text verifying function which extracts the first and second encrypted texts contained in the digital signature data received from the user device, and verifies whether or not the signature text of knowledge is proper by using the group public key; and

a disclosure request function which transfers the first encrypted text to the identification means having an identification means private key corresponding to the identification means public key to make a request to identify the discriminating information of the user device, and further transfers the second encrypted text to the characteristic value disclosure means having a characteristic value disclosure means private key corresponding to the characteristic value disclosure means public key to make a request to identify the characteristic value.

5. The verification means as claimed in claim 4, wherein:

the group public key contains each data of $\Phi\_0$, $\Phi\_1$, $\Phi\_2$, Y, and $\Omega$, the plurality of subsets contain a first subset which discloses only the characteristics, a second subset which discloses the characteristics and takes the characteristic values as the subject of encryption, and a third subset which discloses the characteristics and the characteristic values;

the signature text contains each data of F, c, A, D, B, K, and D'[i] for $\chi$[i] belonging to the first and second subsets;

the signature text verifying function: calculates $\Psi\_0$[i] and $\Psi\_1$[i] from each characteristic $\chi$[i] belonging to all the subsets;

subsequently defines a numerical value acquired by multiplying the $\Phi\_0$ on a numerical value acquired by pairing the Y with a product that is acquired by performing modular exponentiation on the $\Psi\_1$[i] with the D'[i] for $\chi$[i] belonging to the first and second subsets, a product acquired by performing modular exponentiation on the $\Phi 1$ with the D and a numerical value acquired by performing modular exponentiation on the $\Phi 2$ with B, a numerical value acquired by pairing the $\Omega$ with a value acquired by performing modular exponentiation on the $\Phi\_2$ with the A, a numerical value acquired by pairing the Y with k of an inverted sign and the F, and a numerical value acquired by performing modular exponentiation with $\zeta$[i] on a product of $\Psi\_1$[i] corresponding to $\chi$[i] belonging to all the subsets and $\Psi\_1$[i] corresponding to $\chi$[i] belonging to the third subset as L; and

subsequently accepts the signature text when a hash value of data containing the F and the L equals to c, and rejects it if not.

6. An anonymous credential method used in an anonymous credential system which comprises, in a mutually-connected manner, a user device belonging to a specific group, a verification device which verifies that the user device belongs to the group without identifying discriminating information of the user device, an identification device which is authorized to identify the discriminating information, and a characteristic value disclosure device which is authorized to identify characteristic values of the user, wherein

the user device executes each of processing contents of: storing in advance a user device public key, a user device private key corresponding thereto, a group public key showing that the user device belongs to the group, a member certificate containing a numerical value E acquired by performing modular exponentiation by using a reciprocal of data $\rho$ generated from the group private key $\pi$ and a part $\kappa$ of the member certificate on the multiple that is acquired by multiplying a numerical value acquired by performing modular exponentiation on a part $\Phi\_1$ of group public key generated by using the group private key corresponding to the group public key with the user private key $\delta$, a numerical value acquired by performing modular exponentiation on another part $\Phi\_2$ of group public key with a part $\beta$ of the member certificate, and still another part $\Phi\_0$ of the group public key, a characteristic value certificate generated by using the user private key, which contains a characteristic value corresponding to the i-th $\chi[i]$ of the characteristic of the user, a numerical value E'[i] acquired by performing modular exponentiation by using a reciprocal of the $\rho$ on the multiple that is acquired by multiplying a numerical value acquired by performing modular exponentiation on data $\Psi\_1[i]$ acquired from the $\chi[i]$ with the $\delta$, a numerical value acquired by performing modular exponentiation on data $\Psi2$ acquired from the $\chi[i]$ with a part r[i] of the characteristic certificate, and data $\Psi\_0[i]$ acquired from the characteristics $\chi[i]$, an identification device public key of the identification device, and a characteristic value disclosure device public key of the characteristic value disclosure device;

receiving a plurality of subsets in which a plurality of characteristics of the users are classified as inputs;

generating a first encrypted text acquired by encrypting the user device public key with the identification device public key;

generating a second encrypted text acquired by encrypting the characteristic values belonging to a specific subset among the subsets with the characteristic value disclosure device public key; and

provided that a random number used when generating the second encrypted text is $\tau[i]$, a numerical value acquired by multiplying the E'[i] corresponding to $\chi[i]$ with the E is G, and a numerical value acquired by adding all r[i] corresponding to all the characteristics $\chi[i]$ and then adding $\beta$ thereto is r, generating a signature text of knowledge showing that the G, the r, the characteristic value $\zeta[i]$ belonging to the specific subset, the random number $\tau$ used when the second function generates the first encrypted text, and the $\tau'[i]$ satisfy the specific given condition by using a part of the group public key and a part of the member certificate, generating the digital signature data containing the first and second encrypted texts as well as the signature text of knowledge, and outputting it to the verification device; and

the verification device executes each of processing contents of:

storing in advance the group public key and the identification device public key;

extracting the first and second encrypted texts contained in the digital signature data received from the user device; and

verifying whether or not the signature text of knowledge is proper by using the group public key.

7. An anonymous credential program used in an anonymous credential system which comprises, in a mutually-connected manner, a user device belonging to a specific group, a verification device which verifies that the user device belongs to the group without identifying discriminating information of the user device, an identification device which is authorized to identify the discriminating information, and a characteristic value disclosure device which is authorized to identify characteristic values of the user, the program causing a computer, which stores in advance a user device public key, a user device private key corresponding thereto, a group public key showing that the user device belongs to the group, a member certificate containing a numerical value E acquired by performing modular exponentiation by using a reciprocal of data $\rho$ generated from the group private keys $\pi$ and a part $\kappa$ of the member certificate on the multiple that is acquired by multiplying a numerical value acquired by performing modular exponentiation on a part $\Phi\_1$ of group public key generated by using the group private key corresponding to the group public key with the user private key $\delta$, a numerical value acquired by performing modular exponentiation on another part $\Phi\_2$ of group public key with a part $\beta$ of the member certificate, and still another part $\Phi\_0$ of the group public key, a characteristic value certificate generated by using the user private key, which contains a characteristic value corresponding to the i-th $\chi[i]$ of the characteristic of the user, a numerical value E'[i] acquired by performing modular exponentiation by using a reciprocal of the $\rho$ on the multiple that is acquired by multiplying a numerical value acquired by performing modular exponentiation on data $\Psi\_1[i]$ acquired from the $\chi[i]$ with the $\delta$, a numerical value acquired by performing modular exponentiation on data $\Psi2$ acquired from the $\chi[i]$ with a part r[i] of the characteristic certificate, and data $\Psi\_0[i]$ acquired from the characteristics $\chi[i]$, an identification device public key of the identification device, and a characteristic value disclosure device public key of the characteristic value disclosure device, to execute:

a procedure of receiving a plurality of subsets in which a plurality of characteristics of the users are classified as inputs;

a procedure of generating a first encrypted text acquired by encrypting the user device public key with the identification device public key;

a procedure of generating a second encrypted text acquired by encrypting the characteristic values belonging to a specific subset among the subsets with the characteristic value disclosure device public key; and

provided that a random number used when generating the second encrypted text is $\tau[i]$, a numerical value acquired by multiplying the E'[i] corresponding to $\chi[i]$ with the E is G, and a numerical value acquired by adding all r[i] corresponding to all the characteristics $\chi[i]$ and then adding $\beta$ thereto is r, a procedure of generating a signature text of knowledge showing that the G, the r, the characteristic value $\zeta[i]$ belonging to the specific subset, the random number $\tau$ used when the second function generates the first encrypted text, and the $\tau'[i]$ satisfy the specific given condition by using a part of the group public key and a part of the member certificate, generating the digital signature data containing the first and second encrypted texts as well as the signature text of knowledge, and outputting it to the verification device.

# FIG. 1

EP 2 579 501 A1

# FIG. 2

INPUT

110 — SIGNATURE UNIT

111 — FIRST FUNCTION
(INPUT RECEIVING FUNCTION)

112 — SECOND FUNCTION
(FIRST ENCRYPTED TEXT
Cipher GENERATING FUNCTION)

113 — THIRD FUNCTION
(SECOND ENCRYPTED TEXT
Cipher' [i] GENERATING FUNCTION)

114 — FOURTH FUNCTION
(SIGNATURE TEXT OUTPUT FUNCTION)

OUTPUT

INPUT

120 — VERIFICATION UNIT

121 — SIGNATURE TEXT VERIFYING FUNCTION

122 — DISCLOSURE REQUEST FUNCTION

OUTPUT

# FIG. 3

START

**S201** — RECEIVE FOLLOWING INPUTS

SYSTEM PARAMETER
GROUP PUBLIC KEY $\text{ipk}=(\Phi_0, \Phi_1, \Phi_2, \Upsilon, \Omega)$
IDENTIFICATION DEVICE PUBLIC KEY(opk)
USER DEVICE PUBLIC KEY($\Delta$)
USER DEVICE PRIVATE KEY ($\delta$)
SET OF CHARACTERISTICS $\{\chi[i]\}_{i \in H \cup I \cup J}$
SET OF CHARACTERISTIC VALUES $\{\xi[i]\}_{i \in H \cup I \cup J}$
SET OF CHARACTERISTIC VALUE CERTIFICATES $\{(r[i], E'[i])\}_{i \in H \cup I \cup J}$
GROUP CHARACTERISTIC VALUE DISCLOSURE DEVICE PUBLIC KEYS $\{\text{apk}[i]\}_{i \in H \cup I \cup J}$

**S202** — CALCULATE ENCRYPTED TEXT $\text{Cipher} = \text{Enc}(\text{opk}, \Delta; \tau)$

**S203** — CALCULATE ENCRYPTED TEXT FOR EACH CHARACTERISTIC VALUE
$\text{Cipher}'[i] = \text{Enc}'(\text{apk}[i], \xi[i]; \tau'[i])$

**S204** — CALCULATE KNOWLEDGE OF SIGNATURE SATISFYING FOLLOWING CONDITIONS

$\text{Proof}=(G'', \delta'', r'', \{\xi''[i]\}_{i \in H \cup I}, \tau'', \{\tau''[i]\}_{i \in I})$

CALCULATE $\Psi_0[i]=\text{Hash}_0(\chi[i]), \Psi_1[i]=\text{Hash}_1(\chi[i])$ FOR EACH $i \in H \cup I \cup J$

$e(\Phi_0 \cdot (\Pi_{i \in H \cup I \cup J}\Psi_0[i]) \cdot \Phi_1^{\delta''} \cdot (\Pi_{i \in H \cup I}\Psi_1[i]^{\xi''[i]}) \cdot (\Pi_{i \in J}\Psi_1[i]^{\xi[i]}) \Phi_2^{r''}, Y)$
$=e(G'', \Omega Y^\kappa)$

$\text{Cipher}=\text{Enc}(\text{opk}, \Theta^{\delta''}, \tau'')$

$\text{Cipher}'[i]=\text{Enc}''(\text{apk}[i], \xi''[i], \tau''[i])$ FOR ALL $i \in I$

**S205** — OUTPUT SIGNATURE TEXT $\text{Signature} = (\text{Cipher}, \{\text{Cipher}'[i]\}_{i \in I}, \text{Proof})$

END

# FIG. 4

```
              ┌──────────┐
              │  START   │
              └────┬─────┘
                   │
                   ▼
            ╱◇◇◇◇◇◇◇◇◇╲
S211 ─────╱ IS SIGNATURE ╲        NO
          ╲ TEXT Signature ╲──────────────────────┐
           ╲  PROPER ?    ╱                        │
            ╲◇◇◇◇◇◇◇◇◇╱                         │
                   │ YES                            │
                   ▼                                ▼
S212 ─── ┌──────────────────────┐   S213 ─── ┌──────────────────────┐
         │ ACCEPT SIGNATURE TEXT │            │ REJECT SIGNATURE TEXT │
         └──────────┬───────────┘            └──────────┬───────────┘
                    │                                    │
                    ▼                                    │
S214 ─── ┌──────────────────────┐                       │
         │ REQUEST IDENTIFICATION │                      │
         │ DEVICE TO IDENTIFY USER │                     │
         └──────────┬───────────┘                       │
                    │                                    │
                    ▼                                    │
S215 ─── ┌──────────────────────────────┐               │
         │ REQUEST CHARACTERISTIC VALUE  │               │
         │ DISCLOSURE DEVICE TO IDENTIFY │               │
         │   CHARACTERISTIC VALUES       │               │
         └──────────┬───────────────────┘               │
                    │                                    │
                    ▼                                    │
              ┌──────────┐                               │
              │   END    │◄──────────────────────────────┘
              └──────────┘
```

# FIG. 5

START

S221 — READ ENCRYPTED TEXT Cipher AND IDENTIFICATION DEVICE PRIVATE KEY(osk)

S222 — DECRYPT ENCRYPTED TEXT Cipher WITH IDENTIFICATION DEVICE PRIVATE KEY(osk) TO ACQUIRE $\Delta = \theta^{\delta}$

S223 — COLLATE LIST (LIST) WITH $\Delta$, AND OUTPUT CORRESPONDING USER ID

END

# FIG. 6

START

S231 — READ ENCRYPTED TEXT Cipher' [i] AND CHARACTERISTIC VALUE DISCLOSURE DEVICE PRIVATE KEY(ask[i])

S232 — DECRYPT ENCRYPTED TEXT Cipher' [i] WITH CHARACTERISTIC VALUE DISCLOSURE PRIVATE KEY(ask[i]) TO ACQUIRE AND OUTPUT $\chi$ [i]

END

# FIG. 7

USER DEVICE 310
- INPUT/OUTPUT MODULE 312
- COMMUNICATION MODULE 14
- SIGNATURE UNIT 311
  - MEMBER CERTIFICATE ACQUIRING UNIT 410
  - CHARACTERISTIC VALUE CERTIFICATE ACQUIRING UNIT 415
  - USER DEVICE KEY GENERATING UNIT 416
  - COMPUTATION MODULE 417, 13
- STORAGE MODULE
  - SYSTEM PARAMETER 150
    - IDENTIFICATION DEVICE PUBLIC KEY(opk) 161
    - CHARACTERISTIC VALUE DISCLOSURE DEVICE PUBLIC KEY(apk) 171
    - USER DEVICE PUBLIC KEY 181
    - USER DEVICE PRIVATE KEY 182
    - CHARACTERISTIC VALUE CERTIFICATE 184
    - GROUP PUBLIC KEY 191
    - MEMBER CERTIFICATE($\beta$, $\kappa$, E) 193

VERIFICATION DEVICE 320
- DISPLAY MODULE 322
- COMMUNICATION MODULE 324
- VERIFICATION UNIT 321
  - COMPUTATION MODULE 420
- STORAGE MODULE 323
  - SYSTEM PARAMETER 150
    - IDENTIFICATION DEVICE PUBLIC KEY(opk) 161
    - CHARACTERISTIC VALUE DISCLOSURE DEVICE PUBLIC KEY(apk) 171
    - USER DEVICE PUBLIC KEY 181
    - CHARACTERISTIC VALUE CERTIFICATE 184
    - GROUP PUBLIC KEY 191
    - MEMBER CERTIFICATE($\beta$, $\kappa$, E) 193

IDENTIFICATION DEVICE 330
- IDENTIFICATION UNIT 331
  - IDENTIFICATION DEVICE KEY GENERATING UNIT 430
  - 431
- COMMUNICATION MODULE 334
- STORAGE MODULE 333
  - SYSTEM PARAMETER 150
    - IDENTIFICATION DEVICE PUBLIC KEY(opk) 161
    - IDENTIFICATION DEVICE PRIVATE KEY(osk) 162
    - LIST(LIST) 183

50

TO ISSUING DEVICE 360 AND CHARACTERISTIC VALUE AUTHENTICATION DEVICE 370

CHARACTERISTIC VALUE DISCLOSURE DEVICE 340
- CHARACTERISTIC VALUE DISCLOSURE UNIT 341
  - CHARACTERISTIC VALUE DISCLOSURE DEVICE KEY GENERATING UNIT 440
  - COMPUTATION MODULE 441
- COMMUNICATION MODULE 344
- STORAGE MODULE 343
  - SYSTEM PARAMETER 150
    - CHARACTERISTIC VALUE DISCLOSURE DEVICE PUBLIC KEY(apk) 171
    - CHARACTERISTIC VALUE DISCLOSURE DEVICE PRIVATE KEY(ask) 172

301

EP 2 579 501 A1

# FIG. 8

(TO NETWORK 50)

370

CHARACTERISTIC VALUE AUTHENTICATION DEVICE

360 — MEMBER CERTIFICATE ISSUING DEVICE

361 —
460 —
461 —

| GROUP KEY GENERATING UNIT |
| MEMBER CERTIFICATE ISSUING UNIT |

COMPUTATION MODULE

COMMUNI-CATION MODULE

364

374 —

COMMUNICATION MODULE

371
470

CHARACTERISTIC VALUE CERTIFICATE ISSUING UNIT

COMPUTATION MODULE

373

363 —
150 —
191 —
192 —
193 —

SYSTEM PARAMETER
GROUP PUBLIC KEY
GROUP PRIVATE KEY
MEMBER CERTIFICATE

STORAGE MODULE

SYSTEM PARAMETER
CHARACTERISTIC VALUE DISCLOSURE DEVICE PUBLIC KEY(apk)

STORAGE MODULE

150
171

301

EP 2 579 501 A1

# FIG. 9

INPUT

410 — SIGNATURE UNIT

411 — FIRST FUNCTION
(INPUT RECEIVING FUNCTION)

412 — SECOND FUNCTION
(FIRST ENCRYPTED TEXT
Cipher GENERATING FUNCTION)

413 — THIRD FUNCTION
(SECOND ENCRYPTED TEXT
Cipher' [i] GENERATING FUNCTION)

414 — FOURTH FUNCTION
(SIGNATURE TEXT OUTPUT FUNCTION)

OUTPUT

INPUT

420 — VERIFICATION UNIT

421 — SIGNATURE TEXT VERIFYING FUNCTION

422 — DISCLOSURE REQUEST FUNCTION

OUTPUT

# FIG. 10

START

S501 — SELECT $\lambda$ AND $\Lambda_2$ RANDOMLY, AND DEFINE $\Lambda_1$ AND $\Theta^{\lambda}$

S502 — TAKE $\Lambda_1$ AND $\Lambda_2$ AS IDENTIFICATION DEVICE PUBLIC KEY, AND $\lambda$ AS IDENTIFICATION DEVICE PRIVATE KEY

END

# FIG. 11

```
                    ┌─────────────┐
                    │    START    │
                    └──────┬──────┘
                           │
                           ▼
        ┌──────────────────────────────────────────┐
S511 ─  │  SELECT λ' AND Λ'₂ RANDOMLY,              │
        │  AND DEFINE Λ'₁ AND Θ^λ'                  │
        └──────────────────┬───────────────────────┘
                           │
                           ▼
        ┌──────────────────────────────────────────┐
S512 ─  │  TAKE Λ'₁ AND Λ'₂ AS IDENTIFICATION       │
        │  DEVICE PUBLIC KEY, AND λ' AS             │
        │  IDENTIFICATION DEVICE PRIVATE KEY        │
        └──────────────────┬───────────────────────┘
                           │
                           ▼
                    ┌─────────────┐
                    │     END     │
                    └─────────────┘
```

# FIG. 12

S521

START

APPLY CHARACTERISTIC VALUE DISCLOSURE DEVICE PRIVATE KEY AND Cipher TO DECRYPTION FUNCTION $Dec'(ask, Cipher)=U'_0/U'_1{}^{1/\lambda'}$

S524 — NEXT $\zeta''$

S522 —
$\Delta' = \Theta \, \zeta''$
APPLY FOR
$\zeta''=1,2,...?$

NO

YES

S523 — OUTPUT $\zeta''$

END

# FIG. 13

START

S531 — SELECT $\Phi_0, \Phi_1, \Phi_2$ FROM GRP[1],
$\Upsilon$ FROM GRP[2],
$\omega$ FROM Z/qZ RANDOMLY,
AND DEFINE $\omega$ AS $\Omega = \Upsilon^\omega$

S532 — TAKE $(\Phi_0, \Phi_1, \Phi_2, \Upsilon, \Omega)$ AS GROUP PUBLIC
KEY, AND $\omega$ AS GROUP PRIVATE KEY

END

# FIG. 14

START

S541 — SELECT $\delta$ FROM Z/qZ RANDOMLY, AND DEFINE AS $\Delta = \Theta^{\delta}$

S542 — TAKE $\Delta$ AS USER DEVICE PUBLIC KEY, AND $\delta$ AS USER DEVICE PRIVATE KEY

END

# FIG. 15

**415**

START

S551 — RANDOMLY SELECT $\xi$ FROM Z/qZ, AND CALCULATE $C = \Phi_1{}^\delta, \Phi_2{}^\xi$

S552 — GENERATE AND TRANSMIT ZERO-KNOWLEDGE PROOF TEXT prf SATISFYING FOLLOWING CONDITIONS

· RANDOMLY SELECT s AND x FROM Z/qZ, AND CALCULATE $\Xi = \Theta^s$, $\Gamma = \Phi_1{}^s \Phi_2{}^x$

· CALCULATE $\eta = Hash'(\Xi, \Gamma)$

· CALCULATE $S = \eta\delta + s \bmod q$, $X = \eta\xi + x \bmod q$

· DEFINE AS $prf = (\eta, S, X)$

S556 — RECEIVED $(\nu, \kappa, E)$ SATISFY FOLLOWING CONDITION ? $e(\Phi_0 \Phi_1{}^\delta \Phi_2{}^\beta, \Upsilon) = e(E, \Omega \Upsilon^\kappa)$ APPLY WHEN $\beta = \xi + \nu \bmod q$

NO

YES

S557 — STORE $(\nu, \kappa, E)$

REGULAR TERMINATION    ABNORMAL TERMINATION

**461**

START

S553 — RECEIVED prf SATISFY FOLLOWING CONDITION ? $\eta = Hash'(\Xi, \Gamma)$ APPLIES WHEN $\Xi = \Theta^s \Delta^{-\eta}, \Gamma = \Phi_1{}^s \Phi_2{}^x C^{-\eta}$

NO

YES

S554 — RANDOMLY SELECT $\nu$ AND $\kappa$ FROM Z/qZ, AND CALCULATE $E = (\Phi_0 C \Phi_2{}^\nu)^{1/(\omega + k)}$

S555 — TRANSMIT $(\nu, \kappa, E)$

REGULAR TERMINATION    ABNORMAL TERMINATION

EP 2 579 501 A1

# FIG. 16

EP 2 579 501 A1

**416**
START

S561 — RANDOMLY SELECT $\xi'$ FROM Z/qZ, AND CALCULATE $\Psi_1[i]= Hash_1(\chi[i])$, $C'=\Psi_1[i]^{\xi[i]}\Phi_2^{\xi'}$

S562 — GENERATE AND TRANSMIT ZERO-KNOWLEDGE PROOF TEXT prf' SATISFYING FOLLOWING CONDITIONS

- SELECT s' AND x' FROM Z/qZ, AND CALCULATE $\Xi'=\Theta^{s'}$, $\Gamma'=\Psi_1[i]^{s'}\Phi_2^{x'}$
- CALCULATE $\eta'=Hash'(\Xi',\Gamma')$
- CALCULATE $S'=\eta'\xi[i]+ s' \bmod q$, $X'=\eta'\xi'+ x' \bmod q$
- DEFINE AS prf'$=(\eta', S', X')$

S566 — RECEIVED $(v', E'[i])$ SATISFY FOLLOWING CONDITION ?
$e(\Phi_0[i]\Psi_1[i]^{\xi[i]}\Phi_2^{r'[i]},\Upsilon) = e(E[i],\Omega\Upsilon^\kappa)$
APPLY WHEN
$r[i] = \xi'+v' \bmod q$ , $\Psi_0[i] = Hash_0(\chi[i])$
NO

YES

S567 — STORE $(v', E'[i])$

REGULAR TERMINATION     ABNORMAL TERMINATION

**470**
START

S563 — RECEIVED prf' SATISFY FOLLOWING CONDITION ?
$\eta'= Hash'(\Xi',\Gamma')$
APPLY WHEN
$\Psi_1[i] = Hash_1(\chi[i]), \Xi'= \Theta^{s'}\Delta^{-\eta'}, \Gamma'= \Psi_1[i]^{s'}\Phi_2^{x'}C^{-\eta'}$
NO

YES

S564 — SELECT $v'$ FROM Z/qZ RANDOMLY, AND CALCULATE $E'[i]=(\Psi_0[i]C',\Phi_2^{v'})^{1/(\omega+k)}$

S565 — TRANSMIT $(v', E'[i])$

REGULAR TERMINATION     ABNORMAL TERMINATION

# FIG. 17

START

S571 — RECEIVE FOLLOWING INPUTS
SYSTEM PARAMETER
GROUP PUBLIC KEY ipk=$( \Phi_0, \Phi_1, \Phi_2, \Upsilon, \Omega )$
IDENTIFICATION DEVICE PUBLIC KEY(opk)=$(\Lambda_1, \Lambda_2)$
USER DEVICE PUBLIC KEY($\Delta$)
USER DEVICE PRIVATE KEY ($\delta$)
USER DEVICE MEMBER CERTIFICATE($\beta, \kappa, E$)
TEXT M
SET OF CHARACTERISTICS $\{ \chi[i] \}_{i \in H \cup I \cup J}$
SET OF CHARACTERISTIC VALUES $\{ \xi[i] \}_{i \in H \cup I \cup J}$
SET OF CHARACTERISTIC VALUE CERTIFICATES $\{(r[i], E'[i])\}_{i \in H \cup I \cup J}$
GROUP CHARACTERISTIC VALUE DISCLOSURE DEVICE PUBLIC KEYS $\{apk[i]\}_{i \in H \cup I \cup J}$

S572 — RANDOMLY SECLET $\tau$ FROM Z/qZ, AND CALCULATE ENCRYPTED TEXT Cipher
· CALCULATE $U_0 = \Delta\Theta^\tau, U_1 = \Lambda_1^\tau, U_2 = \Lambda_2^\tau$
· DEFINE AS Cipher $= (U_0, U_1, U_2)$

S573 — RANDOMLY SECLET $\tau'[i]$ FROM Z/qZ, AND CALCULATE ENCRYPTED TEXT Cipher' [i]
· CALCULATE $U'_0 = \Theta^{\xi[i]+\tau'[i]}, U'_1 = \Lambda_1^{\tau'[i]}, U'_2 = \Lambda_2^{\tau'[i]}$
· DEFINE AS Cipher'[i] $= (U'_0[i], U'_1[i], U'_2[i])$

S574 — CALCULATE KNOWLEDGE-SIGNATURE TEXT Proof
SATISFYING FOLLOWING CONDITIONS
· RANDOMLY SELECT $\alpha$, d, t, b, a, k FROM $Z/qZ$
· RANDOMLY SELECT d'[i] AND t'[i] FROM Z/qZ FOR EACH $i \in H \cup I$
· CALCULATE $F=E \cdot (\Pi_{i \in H \cup I \cup J} E'[i]) \cdot \Phi_2^\alpha$
· CALCULATE $V_0 = \Theta^{d+1}, V_1 = \Lambda_1^1, V_2 = \Lambda_2^1$
· CALCULATE $V'_0[i] = \Theta^{d'[i]+1'[i]}, V'_1[i] = \Lambda'_1[i]^{t'[i]}, V'_2[i] = \Lambda'_2[i]^{t'[i]}$ for each $i \in I$
· CALCULATE $\Psi_1[i] = Hash_1(\chi[i])$
· CALCULATE $L=e(\Phi_2^d \cdot (\Pi_{i \in H \cup I} \Psi_1[i]^{d'[i]}) \cdot \Phi_2^b, Y)e(\Phi_2^a, \Omega)e(F, Y^{-k})$
· CALCULATE $c=Hash'(ipk, opk, \{\chi[i]\}_{i \in H \cup I \cup J}, F, V_0, V_1, V_2, \{V'_0[i]\}_{i \in I}, \{V'_1[i], \{ V'_2[i]\}_{i \in I}, L, M\}$
· CALCULATE $A=c\alpha+a$ mod q, $D=c\delta+d$ mod q, $T=c\tau+t$ mod q, $B=c(\beta+\kappa\alpha+(\Sigma_{i \in H \cup I \cup J}r[i]))+b$ mod q, $K=c\kappa+k$ mod q
· CALCULATE $D'[i]=c\xi'[i]+d'[i]$ mod q, $T'[i]=c\tau'[i]+[i]$ mod q for each $i \in I$
· OUTPUT Proof=$(F, c, A, D, T, B, K, \{D'[i]\}_{i \in H \cup I}, \{T'[i]\}_{i \in I}$

S575 — OUTPUT SIGNATURE TEXT Signature=(Cipher, $\{Cipher'[i]\}_{i \in I}$, Proof)

END

# FIG. 18

START

S581 — RECEIVE FOLLOWING INPUTS

SYSTEM PARAMETER
GROUP PUBLIC KEY ipk=$(\Phi_0, \Phi_1, \Phi_2, \Upsilon, \Omega)$
IDENTIFICATION DEVICE PUBLIC KEY(opk)=$(\Lambda_1, \Lambda_2)$
TEXT M
SET OF CHARACTERISTICS $\{\chi[i]\}_{i \in H \cup I \cup J}$
SET OF CHARACTERISTIC VALUES $\{\xi[i]\}_{i \in H \cup I \cup J}$
GROUP CHARACTERISTIC VALUE DISCLOSURE DEVICE
PUBLIC KEYS $\{apk[i]\}_{i \in H \cup I \cup J}$
SIGNATURE TEXT Signature=(Cipher,$\{$Cipher'$[i]\}_{i \in I}$,Proof)

S582 — ZERO-KNOWLEDGE PROOF TEXT Proof PROPER ?
(VERIFY WITH FOLLOWING CALCULATIONS)

- CALCULATE $V_0 = \Theta^{D+T} U_0^{-c}$, $V_1 = \Lambda_1^T U_1^{-c}$, $V_{2[i]} = \Lambda_2^T U_2^{-c}$
- CALCULATE $V'_0[i] = \Theta^{D'[i]+T'[i]} U'_0 Q[i]^{-c}$, $V'_1[i] = \Lambda'_1[i]^{T[i]} U'_1[i]^{-c}$,
  $V'_2[i] = \Lambda'_2^{T[i]} U'_2[i]^{-c}$ FOR EACH $i \in I$
- CALCULATE $\Psi_0[i] = Hash_0(\chi[h_1])$, $\Psi_1[i] = Hash_1(\chi[h_1])$
- CALCULATE $L = e(\Phi_1^D \cdot (\Pi_{i \in H \cup I} \Psi_1[i]^{D'[i']}) \cdot \Phi_2^B, \Upsilon) e(\Phi_2^A, \Omega) e(F, \Upsilon^{-k})$
  $e(\Phi_0 \cdot (\Pi_{i \in H \cup I \cup J} \Psi_0[i]) \cdot (\Pi_{i \in J} \Psi_1[i]^{\xi[i]}) \cdot, \Upsilon)^{-c}$
- ACCEPT IF $c = Hash'(ipk, opk, \{\chi[i]\}_{i \in H \cup I \cup J}, F, V_0, V_1, V_2,$
  $\{V'_0[i]\}_{i \in I}, \{V'_1[i]\}_{i \in I}, \{V'_2[i]\}_{i \in I}, L, M)$ AND REJECT IF NOT

NO → S584 — REJECT ZERO-KNOWLEDGE PROOF TEXT Proof

YES → S583 — ACCEPT ZERO-KNOWLEDGE PROOF TEXT Proof

S585 — REQUEST IDENTIFICATION DEVICE TO IDENTIFY USER

S586 — REQUEST CHARACTERISTIC VALUE DISCLOSURE DEVICE TO IDENTIFY CHARACTERISTIC VALUE

END

# FIG. 19

START

↓

S591 — DECRYPT ENCRYPTED TEXT Cipher WITH IDENTIFICATION DEVICE PRIVATE KEY(ask) TO ACQUIRE FOLLWING $\Delta$

$$\Delta = U_0/U_1^{1/\lambda}$$

↓

S592 — COLLATE LIST(LIST)WITH $\Delta$ AND OUTPUT CORRESPONDING USER ID

↓

END

# FIG. 20

START

S601

CALCULATE $\Delta' = U'_0[j]/U'_1[j]^{1/\lambda}$
FROM Cipher'$[i] = (U'_0[i], U'_1[i], U'_2[i])$

S604 — NEXT $\zeta''$

S602 — $\Delta' = \theta^{\zeta''}$
APPLY FOR
$\zeta'' = 1,2,...$?

NO

YES

S603 — OUTPUT $\zeta''$

END

**INTERNATIONAL SEARCH REPORT**

| International application No. |
| --- |
| PCT/JP2011/061775 |

A.   CLASSIFICATION OF SUBJECT MATTER
*H04L9/32*(2006.01)i

According to International Patent Classification (IPC) or to both national classification and IPC

B.   FIELDS SEARCHED

Minimum documentation searched (classification system followed by classification symbols)
H04L9/32

Documentation searched other than minimum documentation to the extent that such documents are included in the fields searched
Jitsuyo Shinan Koho          1922–1996    Jitsuyo Shinan Toroku Koho     1996–2011
Kokai Jitsuyo Shinan Koho    1971–2011    Toroku Jitsuyo Shinan Koho     1994–2011

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| A | JP 2008-131058 A  (KDDI R&D Laboratories, Inc.), 05 June 2008 (05.06.2008), entire text; all drawings (Family: none) | 1-7 |
| A | WO 2009/066557 A1  (NEC Corp.), 28 May 2009 (28.05.2009), entire text; all drawings & US 2010/0251351 A | 1-7 |
| A | J. Camenisch and T. Gross, "Efficient attributes for anonymous credentials", Proceedings of the 15th ACM conference on Computer and communications security (CCS '08), 2008.10, pp. 345-356. | 1-7 |

|  |  |
| --- | --- |
| ☒  Further documents are listed in the continuation of Box C. | ☐   See patent family annex. |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 10 June, 2011 (10.06.11) | 21 June, 2011 (21.06.11) |

| Name and mailing address of the ISA/ | Authorized officer |
| --- | --- |
| Japanese Patent Office |  |
| Facsimile No. | Telephone No. |

Form PCT/ISA/210 (second sheet) (July 2009)

**EP 2 579 501 A1**

<table>
<tr><td colspan="2" align="center">**INTERNATIONAL SEARCH REPORT**</td><td>International application No.<br>PCT/JP2011/061775</td></tr>
<tr><td colspan="3">C (Continuation).   DOCUMENTS CONSIDERED TO BE RELEVANT</td></tr>
<tr><td>Category*</td><td>Citation of document, with indication, where appropriate, of the relevant passages</td><td>Relevant to claim No.</td></tr>
<tr><td align="center">A</td><td>D. Khader, "Attribute Based Group Signature with Revocation", [online], Cryptology ePrint Archive, 2007.06.16, Report 2007/241, [retrieved on 2011.06.10]. Retrieved from the Internet: &lt;URL:http://eprint.iacr.org/2007/241&gt;</td><td align="center">1-7</td></tr>
<tr><td align="center">A</td><td>J. Li and K. Kim, "Attribute-Based Ring Signatures", [online], Cryptology ePrint Archive, 2008.09.16, Report 2008/394, [retrieved on 2011.06.10]. Retrieved from the Internet: &lt;URL:http://eprint.iacr.org/2008/394&gt;</td><td align="center">1-7</td></tr>
</table>

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005311648 A
- JP 2007267153 A
- JP 2009027708 A

- JP 2009171323 A
- JP 2010122797 A

**Non-patent literature cited in the description**

- JanCamenisch, AnnaLysyanskaya: A Signature Scheme with Efficient Protocols. *SCN,* 2002, 268-289

- **JUNFUKUKAWA ; HIDEKI IMAI.** An Efficient Group Signature Scheme from Bilinear Maps. *ACISP,* 2005, 455-467